(19) **Europäisches Patentamt European Patent Office Office européen des brevets**

(11) **EP 4 568 329 A1**

(12) **EUROPEAN PATENT APPLICATION**
published in accordance with Art. 153(4) EPC

(43) Date of publication:
**11.06.2025 Bulletin 2025/24**

(21) Application number: **23849719.2**

(22) Date of filing: **15.05.2023**

(51) International Patent Classification (IPC):
**H04W 24/08** (2009.01)   **H04W 16/26** (2009.01)

(52) Cooperative Patent Classification (CPC):
**H04W 16/26; H04W 24/08**

(86) International application number:
**PCT/JP2023/018047**

(87) International publication number:
**WO 2024/029156 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.08.2022 JP 2022125726**

(71) Applicant: **NEC Corporation**
**108-8001 Tokyo (JP)**

(72) Inventor: **IKEDA, Tetsu**
**Tokyo 108-8001 (JP)**

(74) Representative: **Mathys & Squire**
**The Shard**
**32 London Bridge Street**
**London SE1 9SG (GB)**

(54) **MEASUREMENT DEVICE, MEASUREMENT METHOD, AND RECORDING MEDIUM**

(57)    In order to provide a technique possible to appropriately evaluate communication characteristics or a performance index in a communication apparatus, a measurement apparatus (2830) is an apparatus for a communication apparatus (2820) configured to perform communication in a configured passband and includes: a control unit (2831) configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and a measurement unit (2832) configured to measure a ratio based on a power in the passband and a power in a channel adjacent to the passband, by using the first parameter and the second parameter.

Fig. 21

```
          START
            │
            ▼
  RECEIVE CONFIGURATION INFORMATION      ⌐2101
            │
            ▼
  DETERMINE NOMINAL CHANNEL BANDWIDTH     ⌐2102
            │
            ▼
      CONFIGURE PARAMETERS                ⌐2103
            │
            ▼
        MEASURE ACLR                      ⌐2104
            │
            ▼
           END
```

**EP 4 568 329 A1**

**Description**

Technical Field

The present disclosure relates to a measurement apparatus, a measurement method, and a recording medium.

Background Art

In mobile communication systems, various communication characteristics or performance indices are defined as standards. An example of standards related to communication characteristics or a performance index of a transmitter (for example, a base station) is an adjacent channel leakage power ratio (ACLR). An ACLR is a ratio between the mean power of a target channel (center channel) and the mean power of an adjacent channel adjacent to the target channel. When a sufficient ACLR cannot be secured, inter-channel interference occurs. In consideration of this, NPL 1 describes requirements of an ACLR to be satisfied in a base station.

In a mobile communication system, a relay apparatus is used in some cases. An example of the relay apparatus is a repeater. A repeater amplifies a received signal and transmits a signal resulting from the amplification. When a sufficient ACLR cannot be secured in such a repeater, inter-channel interference similarly occurs. NPL 2 describes requirements of an ACLR to be satisfied in a repeater. As described above, an ACLR is evaluated in various communication apparatuses.

Citation List

Non Patent Literature

[NPL 1] 3GPP TS 38.104 v17.6.0 (2022-06)
[NPL 2] 3GPP TS 38.106 v17.1.0 (2022-06)

**SUMMARY**

Technical Problem

In measurement of an ACLR, a parameter necessary for the measurement needs to be configured. However, in existing techniques, the parameter cannot be configured in some cases due to the configuration of a communication apparatus (for example, a repeater). Note that such a problem also arises with respect to other communication characteristics or performance indices. Examples of the other communication characteristics are a cumulative adjacent channel leakage power ratio (CACLR), an adjacent channel rejection ratio (ACRR), and the like.

In view of the above circumstance, the present disclosure provides a technique possible to appropriately evaluate communication characteristics or a performance index in a communication apparatus.

Solution to Problem

In one or more example embodiments, there is provided a measurement apparatus for a communication apparatus configured to perform communication in a configured passband. The measurement apparatus includes a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and a measurement means configured to measure a ratio based on a power in a channel in the passband and a power in an adjacent channel outside the passband, by using the first parameter and the second parameter. The control means is configured to determine a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS), configure the nominal channel bandwidth as the first parameter, and configure the second parameter by using the first parameter.

In one or more example embodiments, there is provided a measurement apparatus for a communication apparatus configured to perform communication in a configured passband. The measurement apparatus includes a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and a measurement means configured to measure a ratio based on a power in a channel in the passband and a power in an adjacent channel outside the passband, by using the first parameter and the second parameter. The control means is configured to determine a smaller bandwidth from a pass bandwidth in the communication apparatus and a predetermined bandwidth, as a nominal channel bandwidth indicating a nominal bandwidth to be used for the communication by the communication apparatus, configure the nominal channel bandwidth as the first parameter, and configure a value obtained by multiplying the first parameter by a predetermined coefficient, as the second parameter.

In one or more example embodiments, there is provided a measurement method for a communication apparatus configured to perform communication in a configured passband. The measurement method includes configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and measuring a ratio based on a power in a channel in the passband and a power in an adjacent channel outside the passband, by using the first parameter and the second parameter. The configuring includes determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS), configuring the nominal channel bandwidth as the first parameter, and configuring the second parameter by using the first parameter.

In one or more example embodiments, there is provided a measurement method for a communication apparatus configured to perform communication in a configured passband. The measurement method includes configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and measuring a ratio based on a power in a channel in the passband and a power in an adjacent channel outside the passband, by using the first parameter and the second parameter. The configuring includes determining a smaller bandwidth from a pass bandwidth in the communication apparatus and a predetermined bandwidth, as a nominal channel bandwidth indicating a nominal bandwidth to be used for the communication by the communication apparatus, configuring the nominal channel bandwidth as the first parameter, and configuring a value obtained by multiplying the first parameter by a predetermined coefficient, as the second parameter.

In one or more example embodiments, there is provided a computer-readable recording medium having recorded thereon a program. The program causes at least one processor mounted on a communication apparatus configured to perform communication in a configured passband, to execute configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and measuring a ratio based on a power in a channel in the passband and a power in an adjacent channel outside the passband, by using the first parameter and the second parameter. The configuring includes determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS), configuring the nominal channel bandwidth as the first parameter, and configuring the second parameter by using the first parameter.

In one or more example embodiments, there is provided a computer-readable recording medium having recorded thereon a program. The program causes at least one processor mounted on a communication apparatus configured to perform communication in a configured passband, to execute configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement, and measuring a ratio based on a power in a channel in the passband and a power in an adjacent channel outside the passband, by using the first parameter and the second parameter. The configuring includes determining a smaller bandwidth from a pass bandwidth in the communication apparatus and a predetermined bandwidth, as a nominal channel bandwidth indicating a nominal bandwidth to be used for the communication by the communication apparatus, configuring the nominal channel bandwidth as the first parameter, and configuring a value obtained by multiplying the first parameter by a predetermined coefficient, as the second parameter.

Advantageous Effects of Invention

With the above configuration, it is possible to appropriately evaluate communication characteristics or a performance index in a communication apparatus. Issues, configurations, and effects other than the above will be made clear through the following description of example embodiments.

**BRIEF DESCRIPTION OF THE DRAWINGS**

FIG. 1 is a diagram illustrating an example of a configuration of a wireless communication system according to a first example embodiment;

FIG. 2 is a diagram illustrating an example of a configuration of a base station according to the first example embodiment;

FIG. 3 is a diagram illustrating an example of a configuration of a repeater according to the first example embodiment;

FIG. 4 is a diagram illustrating an example of a configuration of a wireless terminal according to the first example embodiment;

FIG. 5 is a diagram illustrating an example of a configuration of a measurement apparatus for the base station according to the first example embodiment;

FIG. 6 is a diagram illustrating an example of a configuration of a measurement apparatus for the repeater according to the first example embodiment;

FIG. 7 is a table illustrating methods of measuring an ACLR and requirements of an ACLR in a base station;

FIG. 8 is a diagram illustrating a relationship between a "BS channel bandwidth" and a "transmission bandwidth configuration ($N_{RB}$)";

FIG. 9 is a diagram illustrating a relationship between a transmission channel and two adjacent channels adjacent to the transmission channel;

FIG. 10 is a flowchart illustrating a flow of processing of the measurement apparatus for the base station according to the first example embodiment;

FIG. 11 is a table illustrating a relationship between operating band, "BS channel bandwidth", and SCS;

FIG. 12 is a table illustrating a relationship between "BS channel bandwidth", SCS, and "transmission bandwidth configuration ($N_{RB}$)";

FIG. 13 is a table illustrating a relationship between operating band, "BS channel bandwidth", and SCS;

FIG. 14 is a table illustrating a relationship between "BS channel bandwidth", SCS, and "transmission bandwidth configuration ($N_{RB}$)";

FIG. 15 is a table illustrating methods of measuring an ACLR and requirements of an ACLR in a repeater;

FIG. 16 is a table illustrating methods of measuring an ACLR and requirements of an ACLR in a repeater;

FIG. 17 is a table illustrating methods of measuring an ACLR and requirements of an ACLR in the repeater according to the first example embodiment;

FIG. 18 is a table illustrating methods of measuring an ACLR and requirements of an ACLR in the repeater according to the first example embodiment;

FIG. 19 is a table illustrating methods of measuring an ACLR and requirements of an ACLR in the repeater according to the first example embodiment;

FIG. 20 is a table illustrating methods of measuring an ACLR and requirements of an ACLR in the repeater according to the first example embodiment;

FIG. 21 is a flowchart illustrating a flow of processing of the measurement apparatus for the repeater according to the first example embodiment;

FIG. 22 is a diagram illustrating a relationship between a nominal channel at a passband edge and two adjacent channels adjacent to and outside a passband;

FIG. 23 is a table illustrating methods of measuring an ACLR and requirements of an ACLR in a repeater according to an example alteration of the first example embodiment;

FIG. 24 is a table illustrating methods of measuring a CACLR and requirements of a CACLR in the repeater according to the example alteration of the first example embodiment;

FIG. 25 is a table illustrating methods of measuring an ACRR and requirements of an ACRR in a repeater;

FIG. 26 is a flowchart illustrating a flow of processing of the measurement apparatus for a repeater according to a third example embodiment;

FIG. 27 is a diagram for illustrating a method of measuring an ACRR according to the third example embodiment;

FIG. 28 is a diagram illustrating an example of a configuration of a wireless communication system according to a fourth example embodiment; and

FIG. 29 is a flowchart illustrating a flow of processing of a measurement apparatus according to the fourth example embodiment.

## DESCRIPTION OF THE EXAMPLE EMBODIMENTS

Hereinafter, a plurality of example embodiments will be described in detail with reference to the accompanying drawings. Note that, in the Specification and drawings, elements to which similar descriptions are applicable are denoted by the same reference signs, and overlapping descriptions may hence be omitted.

Each example embodiment to be described below is merely an example of a configuration that can implement the present invention. Each example embodiment below can be appropriately modified or changed according to a configuration of an apparatus and various conditions. Not all the combinations of elements included in each example embodiment below are necessarily essential to implement the present invention, and one or some of the elements can be appropriately omitted. Further, a configuration obtained by combining a plurality of elements described in the example embodiments below can also be employed as long as there is no inconsistency.

Descriptions will be given in the following order.

1. First Example Embodiment

    1-1. Configuration of Wireless Communication System
    1-2. Configuration of Base Station
    1-3. Configuration of Repeater
    1-4. Configuration of Wireless Terminal
    1-5. Configuration of Measurement Apparatus for Base Station
    1-6. Configuration of Measurement Apparatus for Repeater
    1-7. Measurement of ACLR in Base Station
    1-8. Measurement of ACLR in Repeater
    1-9. Effects
    1-10. Example Alterations

2. Second Example Embodiment
3. Third Example Embodiment
4. Fourth Example Embodiment

    4-1. Configuration of System
    4-2. Configuration of Measurement Apparatus
    4-3. Flow of Processing of Measurement Apparatus
    4-4. Configuration of Parameters

5. Other Example Embodiments

<<1. First Example Embodiment>>

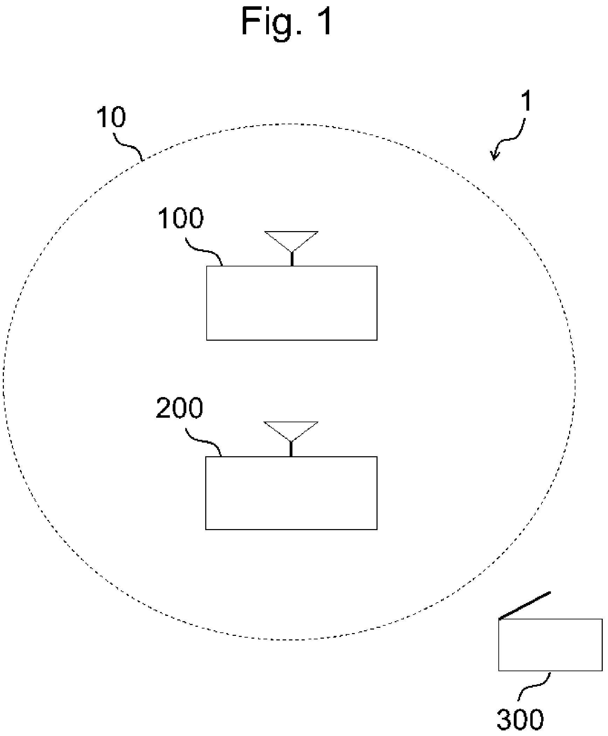

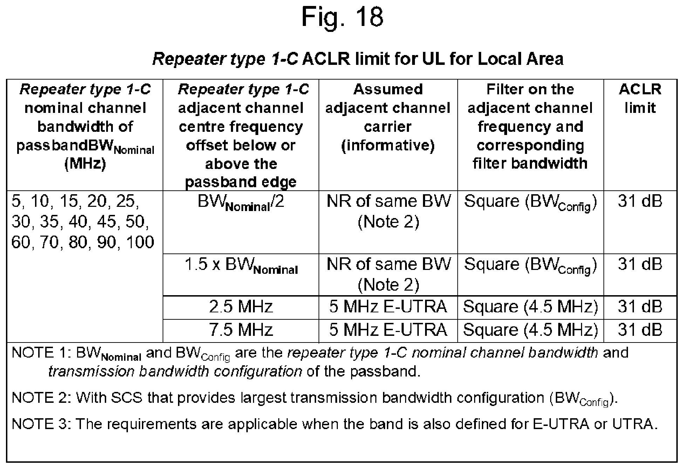

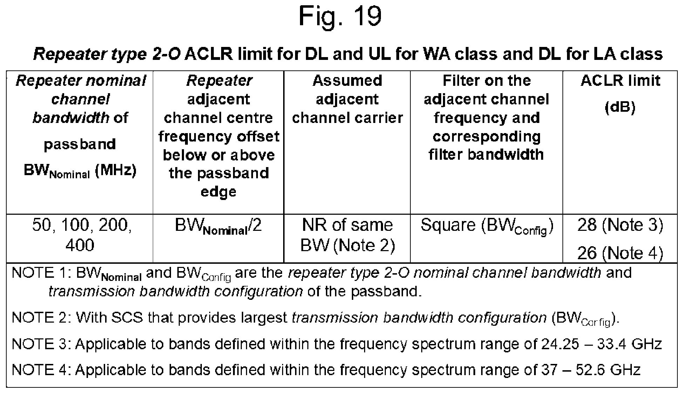

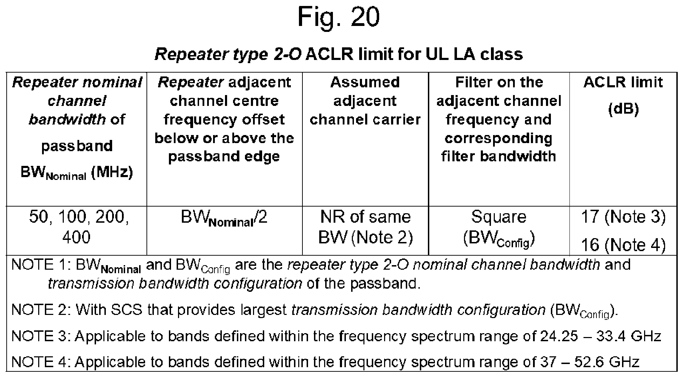

Description will be given of a first example embodiment and example alterations thereof with reference to Figs. 1 to 22.

<1-1. Configuration of Wireless Communication System>

FIG. 1 is a diagram illustrating an example of a configuration of a wireless communication system 1. The wireless communication system 1 is, for example, a system conforming to Third Generation Partnership Project (3GPP) technical specifications. Concretely, the wireless communication system 1 may be an apparatus conforming to fifth-generation (5G) technical specifications. The wireless communication system 1 is, of course, not limited to this example. The wireless communication system 1 includes a base station 100, a repeater 200, and a wireless terminal 300.

The base station 100 is a node of a radio access network (RAN). The base station 100 includes a coverage area 10. The base station 100 performs wireless communication with a wireless terminal (illustration omitted) present in the coverage area 10. Further, the base station 100 performs wireless communication with the wireless terminal 300 via the repeater 200.

The repeater 200 is a relay apparatus used to expand the coverage area 10 of the base station 100. In this example, the repeater 200 relays wireless communication between the base station 100 and the wireless terminal 300. The repeater 200 amplifies a signal from the base station 100 and transmits a signal resulting from the amplification to the wireless terminal 300. The repeater 200 amplifies a signal from the wireless terminal 300 and transmits a signal resulting from the amplification to the base station 100.

The wireless terminal 300 may be a portable terminal such as a smartphone, a mobile phone, or a tablet. The wireless terminal 300 is referred to as a user equipment (UE), a mobile station, or the like in some cases.

Note that a link in which a signal is transmitted from the base station 100 to the wireless terminal 300 will be referred to as "downlink (or DL)" below. A link in which a signal is transmitted from the wireless terminal 300 to the base station 100 will be referred to as "uplink (or UL)".

<1-2. Configuration of Base Station>

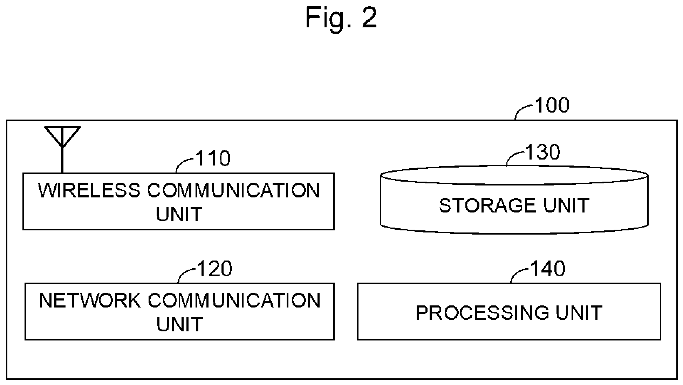

FIG. 2 is a diagram illustrating an example of a configuration of the base station 100 according to the first example embodiment. For example, the base station 100 is a base station conforming to 3GPP technical specifications. The base station 100 may be a base station in 5G/New Radio (NR).

The base station 100 includes a wireless communication unit 110, a network communication unit 120, a storage unit 130, and a processing unit 140.

The wireless communication unit 110 is an element for transmitting and receiving a radio signal. For example, the wireless communication unit 110 includes an antenna, a radio frequency (RF) circuit, and the like.

The network communication unit 120 is an element configured to communicate with a core network (illustration omitted). The network communication unit 120 includes a network adapter, a network interface card, and the like.

The storage unit 130 is an element configured to temporarily or permanently store programs (instructions) and data to be used to execute various kinds of processing in the base station 100. The storage unit 130 includes a volatile memory and a non-volatile memory. The volatile memory may include a random access memory (RAM), for example. The non-volatile memory may include one or more of a read only memory (ROM), a hard disk drive (HDD), and a solid state drive (SSD), for example.

The processing unit 140 is an element configured to provide various functions of the base station 100. The processing unit 140 includes one or more processors. The one or more processors may include one or more of a central processing unit (CPU), a micro processing unit (MPU), and a micro controller, for example. The processing unit 140 executes the programs stored in the storage unit 130 to implement the various functions of the base station 100.

As described in NPL 1, the types of base stations include type 1-C, type 1-H, type 1-O, and type 2-O. The base station 100 may be any type of the above types.

Type 1-C is a type in which an antenna and a transceiver are connected by a coaxial cable. Type 1-H is a type in which an antenna and a transceiver are connected by a transceiver array boundary (TAB) connector. Type 1-O and type 2-O are each a type in which an antenna and a transceiver are configured integrally and no connector is provided between the antenna and the transceiver. Type 1-C, type 1-H, and type 1-O are used in Frequency Range 1 (FR1) in the range between 410 MHz and 7.125 GHz. Type 2-O is used in Frequency Range 2 (FR2) in the range between 24.25 GHz and 71 GHz. According to the type of the base station, a reference point for measuring communication characteristics or a performance index is defined.

As described in NPL 1, classes of a base station include wide area, medium range, local area, and the like.

<1-3. Configuration of Repeater>

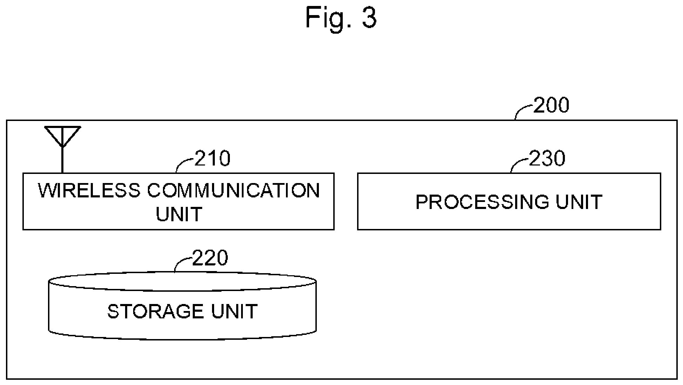

FIG. 3 is a diagram illustrating an example of a configuration of the repeater 200 according to the first example embodiment. For example, the repeater 200 is a repeater conforming to 3GPP technical specifications. The repeater 200 may be a repeater in 5G/NR. The repeater 200 is configured so as to perform communication in a configured passband.

The repeater 200 includes a wireless communication unit 210, a storage unit 220, and a processing unit 230.

The wireless communication unit 210 is an element for transmitting and receiving a radio signal. For example, the wireless communication unit 210 includes an antenna, an amplifier, and the like.

The storage unit 220 is an element configured to temporarily or permanently store programs (instructions) and data to be used to execute various kinds of processing in the repeater 200. The storage unit 220 includes a volatile memory and a non-volatile memory. The volatile memory may include a RAM, for example. The non-volatile memory may include one or more of a ROM, an HDD, and an SSD, for example.

The processing unit 230 is an element configured to provide various functions of the repeater 200. The processing unit 230 includes one or more processors. The one or more processors may include one or more of a CPU, an MPU, and a micro controller, for example. The processing unit 230 executes the programs stored in the storage unit 220 to implement the various functions of the repeater 200.

As described in NPL 2, the types of repeaters include type 1-C and type 2-O. Type 1-C is used in FR1. Type 2-O is used in FR2. The repeater 200 may be any type of the above types.

As described in NPL 2, classes of repeaters include wide area, medium range, and local area.

<1-4. Configuration of Wireless Terminal>

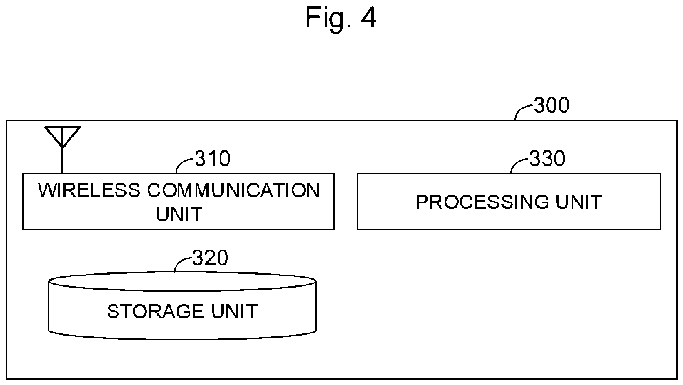

FIG. 4 is a diagram illustrating an example of a configuration of the wireless terminal 300 according to the first example embodiment. For example, the wireless terminal 300 is a wireless terminal conforming to 3GPP technical specifications. The wireless terminal 300 may be a wireless terminal in 5G/NR.

The wireless terminal 300 includes a wireless communication unit 310, a storage unit 320, and a processing unit 330.

The wireless communication unit 310 is an element for transmitting and receiving a radio signal. For example, the wireless communication unit 310 includes an antenna, an RF circuit, and the like.

The storage unit 320 is an element configured to temporarily or permanently store programs (instructions) and data to be used to execute various kinds of processing in the wireless terminal 300. The storage unit 320 includes a volatile memory and a non-volatile memory. The volatile memory may include a RAM, for example. The non-volatile memory may include one or more of a ROM, an HDD, and an SSD, for example.

The processing unit 330 is an element configured to provide various functions of the wireless terminal 300. The processing unit 330 includes one or more processors. The one or more processors may include one or more of a CPU, an MPU, and a micro controller, for example. The processing unit 330 executes the programs stored in the storage unit 320 to implement the various functions of the wireless terminal 300.

<1-5. Configuration of Measurement Apparatus for Base Station>

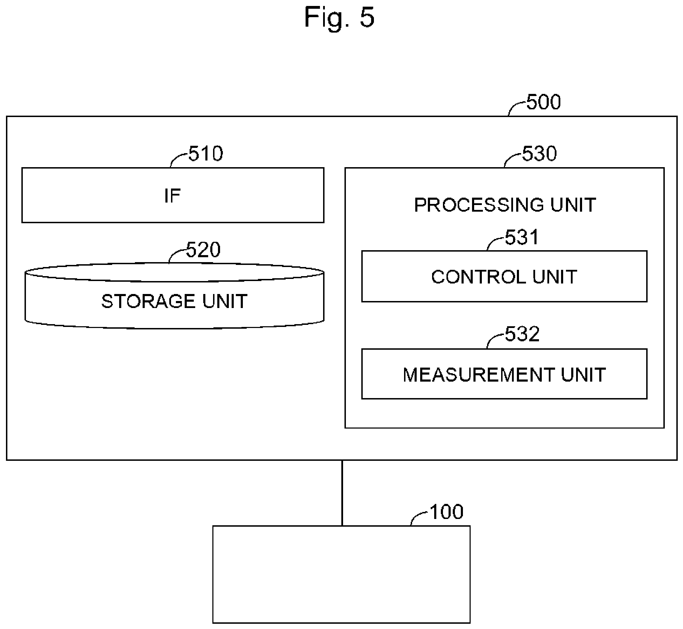

FIG. 5 is a diagram illustrating an example of a configuration of a measurement apparatus 500 for the base station 100 according to the first example embodiment. The measurement apparatus 500 is connected to the base station 100. The measurement apparatus 500 measures an ACLR in the base station 100.

The measurement apparatus 500 includes an interface (IF) 510, a storage unit 520, and a processing unit 530.

The interface (IF) 510 includes an interface for receiving information necessary for measurement of an ACLR. For example, the IF 510 includes an interface for receiving a signal and information for measuring an ACLR from the base station 100. The IF 510 may include an interface (for example, an input apparatus) for receiving an input from an operator and an interface (for example, an output apparatus) for outputting a measurement result and an evaluation result of an ACLR to the operator.

The storage unit 520 is an element configured to temporarily or permanently store programs (instructions) and data to be used to execute various kinds of processing in the measurement apparatus 500. The storage unit 520 includes a volatile memory and a non-volatile memory. The volatile memory may include a RAM, for example. The non-volatile memory may include one or more of a ROM, an HDD, and an SSD, for example.

The processing unit 530 is an element configured to provide various functions of the measurement apparatus 500. The processing unit 530 includes one or more processors. The one or more processors may include one or more of a CPU, an MPU, and a micro controller, for example. The processing unit 530 executes the programs stored in the storage unit 520 to implement the various functions of the measurement apparatus 500.

The processing unit 530 includes a control unit 531 and a measurement unit 532 as functional blocks (functional modules). The control unit 531 configures parameters necessary for measurement of an ACLR. The measurement unit 532 measures an ACLR by using the parameters configured by the control unit 531.

<1-6. Configuration of Measurement Apparatus for Repeater>

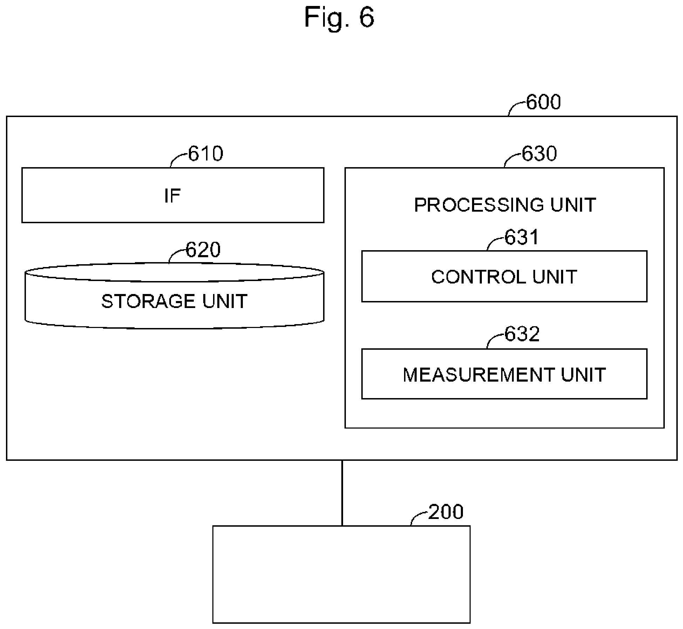

FIG. 6 is a diagram illustrating an example of a configuration of a measurement apparatus 600 for the repeater 200 according to the first example embodiment. The measurement apparatus 600 is connected to the repeater 200. The measurement apparatus 600 measures an ACLR in the repeater 200.

The measurement apparatus 600 includes an interface (IF) 610, a storage unit 620, and a processing unit 630.

The interface (IF) 610 includes an interface for receiving information necessary for measurement of an ACLR. For example, the IF 610 includes an interface for receiving a signal and information for measuring an ACLR from the repeater 200. The IF 610 may include an interface (for example, an input apparatus) for receiving an input from an operator and an interface (for example, an output apparatus) for outputting a measurement result and an evaluation result of an ACLR to the operator.

The storage unit 620 is an element configured to temporarily or permanently store programs (instructions) and data to be used to execute various kinds of processing in the measurement apparatus 600. The storage unit 620 includes a volatile memory and a non-volatile memory. The volatile memory may include a RAM, for example. The non-volatile memory may include one or more of a ROM, an HDD, and an SSD, for example.

The processing unit 630 is an element configured to provide various functions of the measurement apparatus 600. The processing unit 630 includes one or more processors. The one or more processors may include one or more of a CPU, an MPU, and a micro controller, for example. The processing unit 630 executes the programs stored in the storage unit 620 to implement the various functions of the measurement apparatus 600.

The processing unit 630 includes a control unit 631 and a measurement unit 632 as functional blocks (functional modules). The control unit 631 configures parameters necessary for measurement of an ACLR. The measurement unit 632 measures an ACLR by using the parameters configured by the control unit 631.

<1-7. Measurement of ACLR in Base Station>

First, measurement of an ACLR in the base station 100 will be described. A band operated by the base station 100 will be referred to as an "operating band" below. Further, a channel used for transmission from the base station 100 will be referred to as a "transmission channel" to differentiate from other channels.

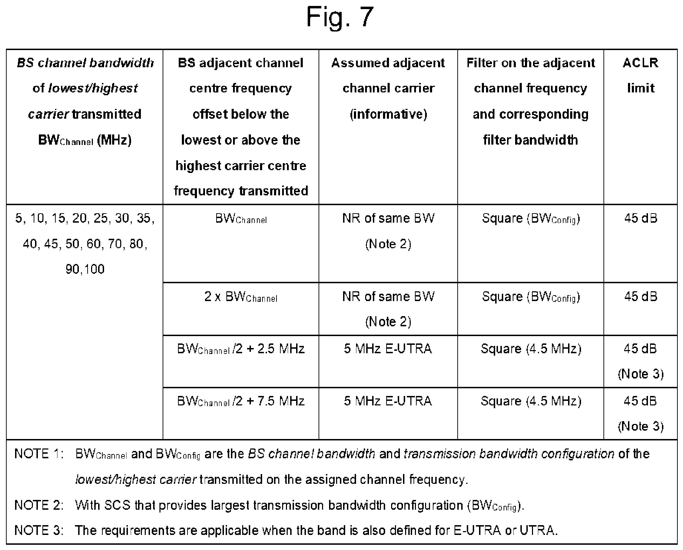

FIG. 7 is a table illustrated in NPL 1 and illustrating methods of measuring an ACLR and requirements of an ACLR. The requirements of an ACLR are described as "ACLR limit".

In the table in FIG. 7, $BW_{Channel}$ denotes "BS channel bandwidth" (refer to NOTE 1). The "BS channel bandwidth" indicates a bandwidth of a transmission channel.

In the table in FIG. 7, $BW_{Config}$ denotes "transmission bandwidth configuration" (refer to NOTE 1). $BW_{Config}$ indicates a bandwidth to which resource blocks are actually assigned for transmission from a base station and also indicates the bandwidth of a filter for measuring an ACLR. Hence, $BW_{Config}$ is within a range of a bandwidth defined by $BW_{Channel}$.

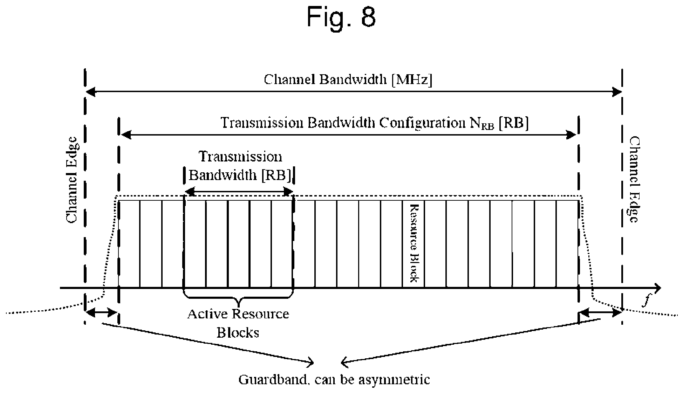

FIG. 8 is a diagram illustrated in NPL 1 and illustrating a relationship between a "BS channel bandwidth" and a "transmission bandwidth configuration". "Channel Bandwidth" corresponds to $BW_{Channel}$. "Transmission Bandwidth Configuration $N_{RB}$" corresponds to $BW_{ConFIG}$. Note that "Transmission Bandwidth Configuration" is indicated as the number of resource blocks ($N_{RB}$). $BW_{Config}$ and $N_{RB}$ have the following relationship (Expression 1). Here, SCS denotes "subcarrier spacing".

$$BW_{Config} = N_{RB} \times SCS \times 12 \text{ (Expression 1)}$$

In the table in FIG. 7, the first row defines a method of measuring an ACLR related to a channel adjacent to a transmission channel and a requirement of the ACLR. The adjacent channel will be referred to as a "first BS adjacent channel" below for convenience. The second row defines a method of measuring an ACLR related to a channel adjacent to the first BS adjacent channel and a requirement of the ACLR. The adjacent channel will be referred to as a "second BS adjacent channel" below for convenience.

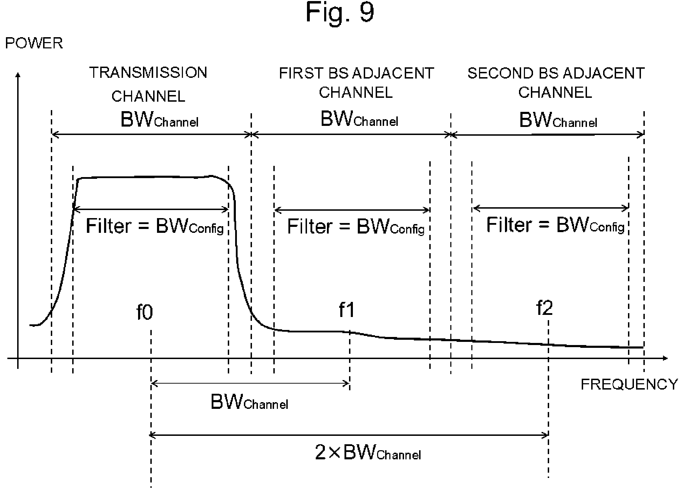

FIG. 9 is a diagram illustrating a relationship of a transmission channel, the first BS adjacent channel, and the second BS adjacent channel. To simplify description, only "the first BS adjacent channel and the second BS adjacent channel" adjacent to the transmission channel on the upper side thereof in the frequency direction are illustrated in FIG. 9. Note that each representation "Filter = $BW_{Config}$" in FIG. 9 indicates the bandwidth of a filter for measuring power in the corresponding channel.

According to the first row of the table in FIG. 7, the first BS adjacent channel is an NR channel having the same bandwidth as $BW_{Channel}$. A center frequency f1 of the first BS adjacent channel is defined as a frequency positioned away from a center frequency f0 of the transmission channel by $BW_{Channel}$. Further, a filter used in the first BS adjacent channel is a filter having a bandwidth defined by $BW_{ConFIG}$.

The measurement apparatus 500 measures an ACLR related to the transmission channel and the first BS adjacent channel as follows. The measurement unit 532 filters the transmission channel with the center frequency f0 as the center and a bandwidth of $BW_{ConFIG}$. The measurement unit 532 then measures a power P0 of the transmission channel. The measurement unit 532 filters the first BS adjacent channel with the center frequency f1 as the center and a bandwidth of $BW_{ConFIG}$. The measurement unit 532 then measures a power P1 of the first BS adjacent channel. The measurement unit 532 obtains an ACLR related to the transmission channel and the first BS adjacent channel according to an expression, P0/P1.

According to the second row of the table in FIG. 7, the second BS adjacent channel is an NR channel having the same bandwidth as $BW_{Channel}$. A center frequency f2 of the second BS adjacent channel is defined as a frequency positioned away from the center frequency f0 of the transmission channel by "$2 \times BW_{Channel}$". Further, a filter used in the second BS adjacent channel is a filter having a bandwidth defined by $BW_{ConFIG}$.

The measurement apparatus 500 measures an ACLR related to the transmission channel and the second BS adjacent channel as follows. The measurement unit 532 measures a power P0 of the transmission channel as described above. The measurement unit 532 filters the second BS adjacent channel with the center frequency f2 as the center and a bandwidth of $BW_{ConFIG}$. The measurement unit 532 then measures a power P2 of the second BS adjacent channel. The measurement unit 532 obtains an ACLR related to the transmission channel and the second BS adjacent channel according to an expression, P0/P2.

Note that, in the table in FIG. 7, the third row defines a method of measuring an ACLR and a requirement of the ACLR when the first BS adjacent channel is an E-UTRA channel with a bandwidth of 5 MHz. In this case, a center frequency f1 of the first BS adjacent channel is defined as a frequency positioned away from the center frequency f0 of the transmission channel by ($BW_{Channel}/2 + 2.5$ MHz). Further, a filter used in the first BS adjacent channel is a filter having a predefined bandwidth (4.5 MHz). The measurement unit 532 obtains an ACLR related to the transmission channel and the first BS adjacent channel in the above-described method.

In the table in FIG. 7, the fourth row defines a method of measuring an ACLR and a requirement of an ACLR when the second BS adjacent channel is an E-UTRA channel with a bandwidth of 5 MHz. In this case, a center frequency f2 of the second BS adjacent channel is defined as a frequency positioned away from the center frequency f0 of the transmission channel by ($BW_{Channel}/2 + 7.5$ MHz). Further, a filter used in the second BS adjacent channel is a filter having a predefined bandwidth (4.5 MHz). The measurement unit 532 obtains an ACLR related to the transmission channel and the second BS adjacent channel in the above-described method.

Note that the third row and the fourth row of the table in FIG. 7 are applied when an operating band subject to measurement of an ACLR is also defined for E-UTRA or UTRA as defined in "NOTE 3".

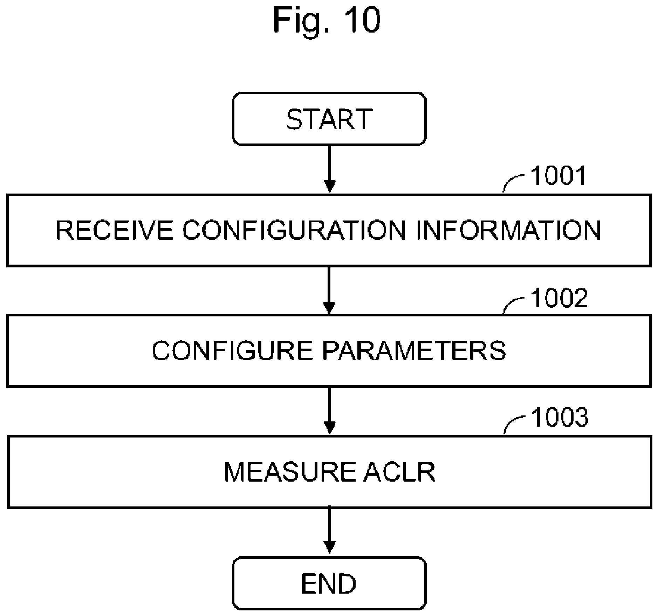

FIG. 10 is a flowchart illustrating a flow of processing of the measurement apparatus 500 according to the first example embodiment. As described in the following, it is assumed that an operating band is "n1" belonging to FR1 and a "BS channel bandwidth" is 50 MHz.

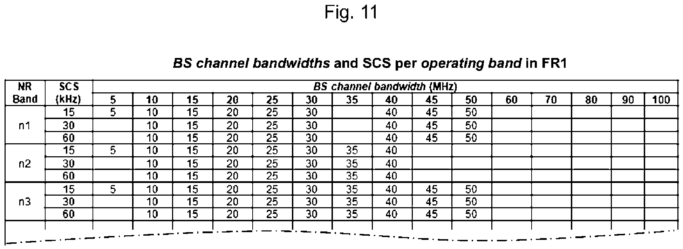

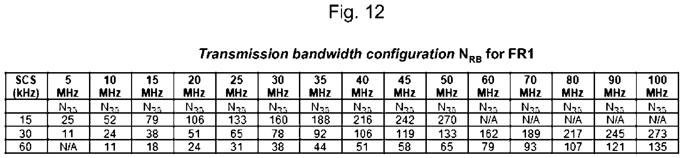

The storage unit 520 of the measurement apparatus 500 stores information necessary for measurement of an ACLR. For example, the storage unit 520 stores the table in FIG. 7. The storage unit 520 further stores a table in FIG. 11 and a table in FIG. 12. FIG. 11 is a part of a table illustrated in NPL 1 and is a table illustrating a relationship of operating band, "BS channel bandwidth", and SCS. FIG. 12 is a table illustrated in NPL 1 and is a table illustrating a relationship of "BS channel bandwidth", SCS, and "transmission bandwidth configuration ($N_{RB}$)". The measurement apparatus 500 refers to the tables stored in the storage unit 520 and executes the following processing.

The control unit 531 receives configuration information necessary for measurement of an ACLR (1001). The control unit 531 may receive configuration information from the base station 100 via the IF 510. The configuration information may include an operating band, the type of the base station 100, an SCS, and the bandwidth of a transmission channel (i.e., a BS channel bandwidth).

The control unit 531 configures (derives) parameters necessary for measurement of an ACLR by using the configuration information (1002). The parameters include $BW_{Channel}$ and $BW_{ConFIG}$.

The control unit 531 configures $BW_{Channel}$ at "BS channel bandwidth". Specifically, the control unit 531 configures $BW_{Channel}$ at 50,000 kHz.

The control unit 531 configures the largest value of the possible $BW_{Config}$ values as final $BW_{Config}$ for the first BS adjacent channel and the second BS adjacent channel.

Specifically, since the operating band corresponds to "n1" belonging to FR1, the control unit 531 refers to the table in FIG. 11. According to the table in FIG. 11, possible SCSs when the "BS channel bandwidth" is 50 MHz are {15, 30, 60} kHz. The control unit 531 acquires {15, 30, 60} kHz as a set of SCSs.

Next, the control unit 531 refers to the table in FIG. 12 for each of the SCSs in the set of SCSs. When the SCS is 15 kHz, the control unit 531 acquires "270" as $N_{RB}$. Similarly, the control unit 531 acquires $N_{RB}$ (= 133) in a case where the SCS is 30 kHz and $N_{RB}$ (= 65) in a case where the SCS is 60 kHz.

The control unit 531 calculates $BW_{Config}$ by using (Expression 1) for each of the SCSs.

In a case of SCS = 15 kHz: $BW_{Config} = 270 \times 15 \times 12 = 48,600$ kHz
In a case of SCS = 30 kHz: $BW_{Config} = 133 \times 30 \times 12 = 47,880$ kHz
In a case of SCS = 60 kHz: $BW_{Config} = 65 \times 60 \times 12 = 46,800$ kHz

The control unit 531 configures the largest value of the possible $BW_{Config}$ values (48,600, 47,880, and 46,800) as final $BW_{ConFIG}$. Specifically, the control unit 531 configures $BW_{Channel}$ at 48,600 kHz.

The measurement unit 532 measures an ACLR by using $BW_{Channel}$ and $BW_{Config}$ (1003). The measurement unit 532 refers to the table in FIG. 7 and measures an ACLR related to the transmission channel and the first BS adjacent channel in the above-described method. The measurement unit 532 determines whether the ACLR satisfies the condition in ACLR limit in the table in FIG. 7.

The measurement unit 532 refers to the table in FIG. 7 and measures an ACLR related to the transmission channel and the second BS adjacent channel in the above-described method. The measurement unit 532 determines whether the ACLR satisfies the condition in ACLR limit in the table in FIG. 7.

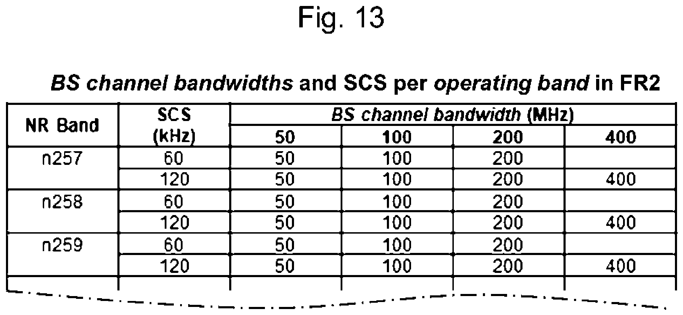

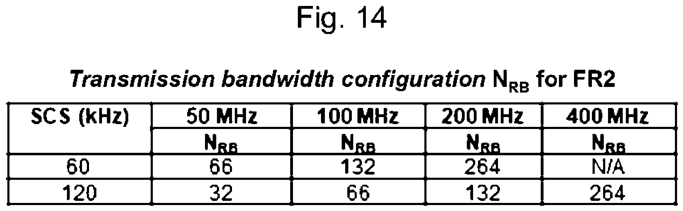

Note that, when the operating band corresponds to FR2, the control unit 531 refers to the table in FIG. 13 and the table in FIG. 14 and configures $BW_{Config}$ in a manner similar to that described above. FIG. 13 is a part of a table described in NPL 1 and is a table illustrating a relationship of operating band, "BS channel bandwidth", and SCS. FIG. 14 is a table illustrated in NPL 1 and is a table illustrating a relationship of "BS channel bandwidth", SCS, and "transmission bandwidth configuration ($N_{RB}$)".

<1-8. Measurement of ACLR in Repeater>

(Overview of Present Example Embodiment)

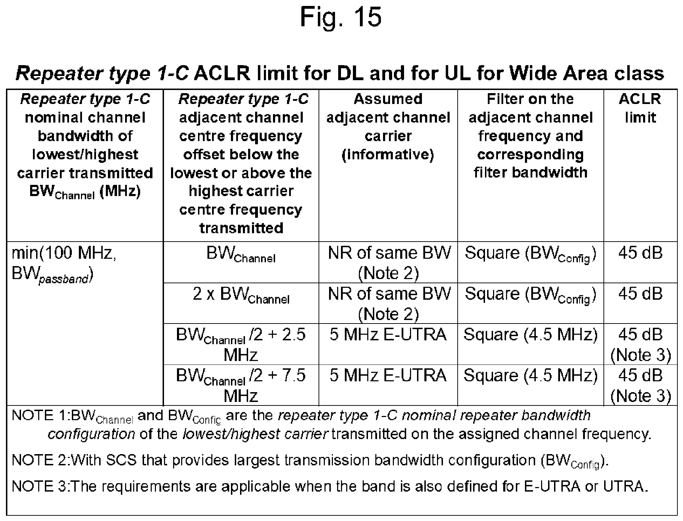

First, an issue to be solved by a configuration of the present example embodiment will be described. FIG. 15 is a table illustrated in NPL 2 and illustrating methods of measuring an ACLR and requirements of an ACLR. Note that the table in FIG. 15 is a table of a case where the type of a repeater is type 1-C and the class of the repeater is wide area. The requirements of an ACLR are described as "ACLR limit".

The repeater 200 amplifies a received signal within a frequency range defined as a passband and transmits a signal resulting from the amplification. The repeater 200, different from the base station 100, does not recognize a channel bandwidth. Hence, as described in the table in FIG. 15, a concept called a nominal channel bandwidth is introduced to the repeater 200. The nominal channel bandwidth indicates a nominal bandwidth to be used for transmission from the repeater 200.

As described in the table in FIG. 15, the nominal channel bandwidth is calculated according to (Expression 2) below. Here, $BW_{passband}$ indicates the bandwidth of the passband. 100 MHz corresponds to the largest channel bandwidth defined for the base station in FR1. The function, min, is a function for selecting a smaller one of the numeric values in parentheses.

$$\min(100\ \mathrm{MHz},\ BW_{passband}) \qquad (\text{Expression 2})$$

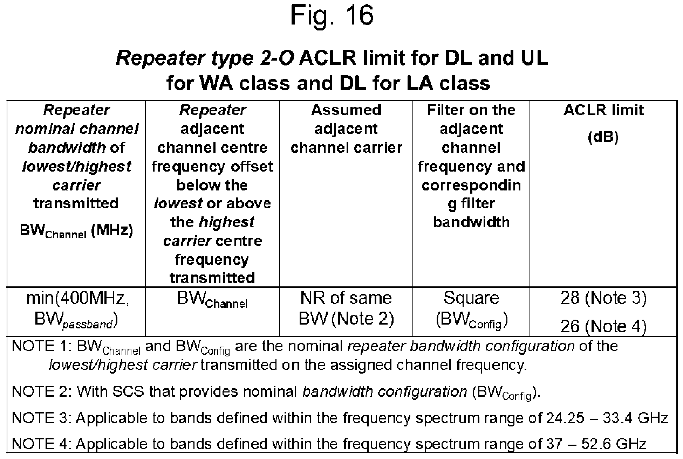

FIG. 16 is a table illustrated in NPL 2 and illustrating methods of measuring an ACLR and requirements of an ACLR. As described in the table in FIG. 16, the nominal channel bandwidth is calculated according to (Expression 3) below according to the type and the class of a repeater in some cases. Note that 400 MHz corresponds to the largest channel bandwidth defined for the base station in FR2.

$$\min(400\ \mathrm{MHz},\ BW_{passband}) \qquad (\text{Expression 3})$$

The passband needs to be a bandwidth within the operating band, and hence $BW_{passband}$ takes a value equal to or smaller than the bandwidth of the operating band. Meanwhile, $BW_{passband}$ may be any value as long as the value is equal to or smaller than the bandwidth of the operating band.

For example, assume that the passband of the repeater is "n1" belonging to FR1 and $BW_{passband}$ is 50 MHz. In this case, the nominal channel bandwidth is 50 MHz according to (Expression 2). $BW_{Channel}$ and $BW_{Config}$ are configured by using the nominal channel bandwidth. When the same method to that in the case of the base station 100 is used, $BW_{Channel}$ is configured at 50,000 kHz, and $BW_{Config}$ is configured at 48,600 kHz.

In another example, assume, for example, that the passband of the repeater is "n3 (UL: 1710 to 1785 MHz, DL: 1805 to 1880 MHz)" belonging to FR1. $BW_{passband}$ is 75 MHz. The nominal channel bandwidth is 75 MHz according to (Expression 2). Hence, $BW_{Channel}$ is configured at 75 MHz.

However, in the table in FIG. 11, 75 MHz is not specified as a possible value of the "BS channel bandwidth". For this reason, $BW_{Config}$ cannot be configured in the same method as that in the case of the base station 100. As in this case, parameters necessary for measurement of an ACLR cannot be configured due to the configuration (for example, the pass bandwidth) of a repeater in some cases. This leads to an issue that evaluation of an ACLR cannot be performed appropriately in such a repeater.

To solve the issue, a new parameter $BW_{Nominal}$ is defined in the present example embodiment. The measurement apparatus 600 configures $BW_{Nominal}$ by using a nominal channel bandwidth. The measurement apparatus 600 configures $BW_{Config}$ by using $BW_{Nominal}$. The measurement apparatus 600 then measures an ACLR by using $BW_{Nominal}$ and $BW_{ConFIG}$.

$BW_{Nominal}$ indicates a bandwidth to be used for transmission from the repeater 200. $BW_{Nominal}$ is selected from a plurality of channel bandwidths specified in advance as possible values of "BS channel bandwidth". $BW_{Config}$ indicates a bandwidth to which resource blocks are actually assigned for transmission from the repeater 200 and also indicates the bandwidth of a filter for measuring an ACLR, as described above.

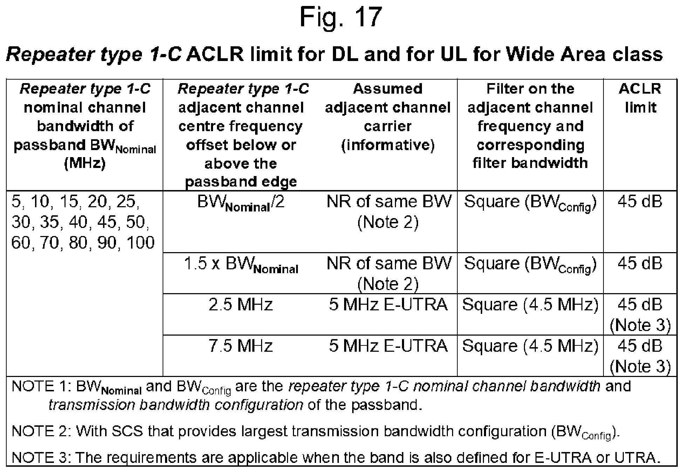

The storage unit 620 of the measurement apparatus 600 stores information necessary for measurement of an ACLR. The storage unit 620 stores a table defining methods of measuring an ACLR and requirements of an ACLR for each combination of a type and a class of the repeater 200. For example, the storage unit 620 stores the tables in Figs. 17 to 20. The tables in Figs. 17 to 20 each define methods of measuring an ACLR using $BW_{Nominal}$ and $BW_{Config}$ and requirements of an ACLR. The first row of each of the tables in Figs. 17 to 20 defines $BW_{Nominal}$.

In a case of type 1-C of a repeater used in FR1, $BW_{Nominal}$ is selected from a plurality of channel bandwidths {5, 10, 15, 20, 25, 30, 35, 40, 45, 50, 60, 70, 80, 90, 100} MHz specified as possible values of "BS channel bandwidth" in the table in FIG. 11.

In a case of type 2-O of a repeater used in FR2, $BW_{Nominal}$ is selected from a plurality of channel bandwidths {50, 100, 200, 400} MHz specified as possible values of "BS channel bandwidth" in the table in FIG. 13.

The storage unit 620 stores information indicating a relationship of operating band, "BS channel bandwidth", and SCS. Specifically, the storage unit 620 stores the table in FIG. 11 and the table in FIG. 13. The storage unit 620 further stores information indicating a relationship of "BS channel bandwidth", SCS, and "transmission bandwidth configuration ($N_{RB}$)". Specifically, the storage unit 620 stores the table in FIG. 12 and the table in FIG. 14.

$BW_{Config}$ is configured by the same method as that of the case of the base station 100 by using the tables in Figs. 11 to 14.

Next, a method of configuring $BW_{Nominal}$ and $BW_{Config}$ will be defined more concretely in each of a case where an operating band belongs to FR1 and a case where an operating band belongs to FR2.

(Case where Operating Band Belongs to FR1)

First, the control unit 631 obtains a provisional nominal channel bandwidth according to (Expression 2). The control unit 631 refers to the table in FIG. 11. Assume that, in the table in FIG. 11, the provisional nominal channel bandwidth is specified as a possible value of "BS channel bandwidth". In this case, the control unit 631 determines the provisional nominal channel bandwidth as the final nominal channel bandwidth. The control unit 631 configures $BW_{Nominal}$ at the final nominal channel bandwidth.

Assume that, in the table in FIG. 11, the provisional nominal channel bandwidth is not specified as a possible value of "BS channel bandwidth". In this case, the control unit 631 determines, as the final nominal channel bandwidth, a bandwidth that is equal to or smaller than the provisional nominal channel bandwidth and is also the largest among the plurality of channel bandwidths specified as the possible values of "BS channel bandwidth" in the table in FIG. 11. The control unit 631 configures $BW_{Nominal}$ at the final nominal channel bandwidth.

The control unit 631 refers to FIG. 11 and acquires information related to a set of possible SCSs for $BW_{Nominal}$. The control unit 631 refers to the table in FIG. 12 for each of the SCSs in the set of SCSs. The control unit 631 calculates $BW_{Config}$ by using (Expression 1) for each of the SCSs. The control unit 631 configures the largest value of the possible $BW_{Config}$ values as final $BW_{ConFIG}$.

(Case where Operating Band Belongs to FR2)

First, the control unit 631 obtains a provisional nominal channel bandwidth according to (Expression 3). The control unit 631 refers to the table in FIG. 13. Assume that, in the table in FIG. 13, the provisional nominal channel bandwidth is specified as a possible value of "BS channel bandwidth". In this case, the control unit 631 determines the provisional nominal channel bandwidth as the final nominal channel bandwidth. The control unit 631 configures $BW_{Nominal}$ at the final nominal channel bandwidth.

Assume that, in the table in FIG. 13, the provisional nominal channel bandwidth is not specified as a possible value of "BS channel bandwidth". In this case, the control unit 631 determines, as the final nominal channel bandwidth, a bandwidth that is equal to or smaller than the provisional nominal channel bandwidth and is also the largest among the plurality of channel bandwidths specified as the possible values of "BS channel bandwidth" in the table in FIG. 13. The control unit 631 configures $BW_{Nominal}$ at the final nominal channel bandwidth.

The control unit 631 refers to FIG. 13 and acquires information related to a set of possible SCSs for $BW_{Nominal}$. The control unit 631 refers to the table in FIG. 14 for each of the SCSs in the set of SCSs. The control unit 631 calculates $BW_{Config}$ by using (Expression 1) for each of the SCSs. The control unit 631 configures the largest value of the possible $BW_{Config}$ values as final $BW_{ConFIG}$.

(Flow of Processing of Measurement Apparatus)

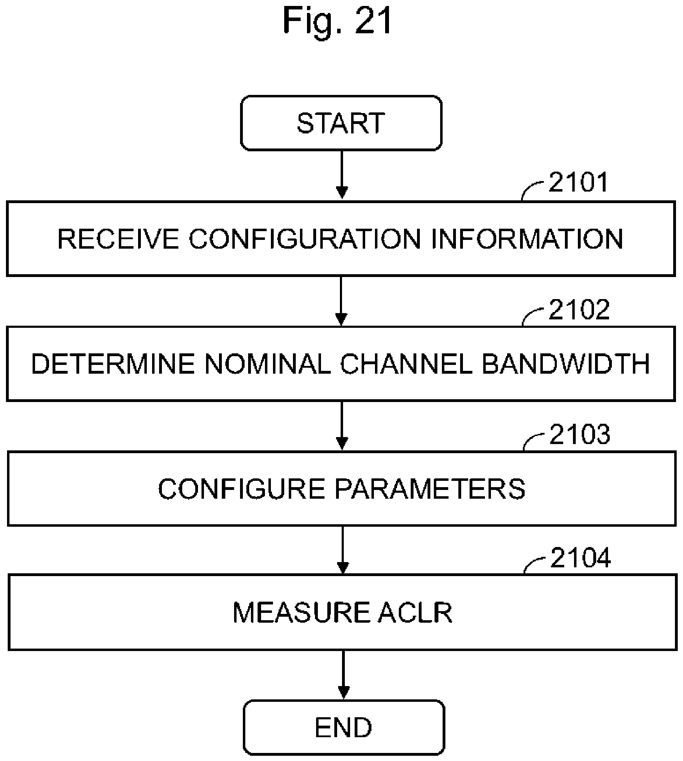

FIG. 21 is a flowchart illustrating a flow of processing of the measurement apparatus 600 according to the first example embodiment. Assume that the measurement apparatus 600 measures an ACLR in condition 1 below.

(Condition 1)

Type of the repeater 200: type 1-C

Class of the repeater 200: wide area
Operating band of the base station 100: n3
Pass bandwidth: 75 MHz

The control unit 631 receives configuration information necessary for measurement of an ACLR (2101). The control unit 631 receives configuration information from the repeater 200 via the IF 610. The control unit 631 may receive configuration information input by an operation by an operator, via the IF 610.

The configuration information includes the type of the repeater 200, the class of the repeater 200, the operating band of the base station 100, and a pass bandwidth.

The control unit 631 selects a table necessary for the measurement of an ACLR from the tables stored in the storage unit 620 according to the configuration information. In the present example, since the type of the repeater 200 is type 1-C and the class of the repeater 200 is wide area, the control unit 631 selects the table in FIG. 17. Further, since the operating band corresponds to "n3" belonging to FR1, the control unit 631 selects the table in FIG. 11 and the table in FIG. 12.

The control unit 631 determines a nominal channel bandwidth (2102). First, the control unit 631 obtains a provisional nominal channel bandwidth according to (Expression 2). The provisional nominal channel bandwidth results in being 75 MHz.

Next, the control unit 631 refers to the table in FIG. 11. The control unit 631 acquires the values of "BS channel bandwidth" specified as possible values for "n3". A set of "BS channel bandwidth" acquired here is {5, 10, 15, 20, 25, 30, 35, 40, 45, 50} MHz. The provisional nominal channel bandwidth (75 MHz) is not included in the set of "BS channel bandwidth". In other words, in the table in FIG. 11, the provisional nominal channel bandwidth is not specified as a possible value of "BS channel bandwidth". Hence, the control unit 631 determines, as the final nominal channel bandwidth, a bandwidth that is equal to or smaller than the provisional nominal channel bandwidth (75 MHz) and is also the largest from the set of "BS channel bandwidth". The control unit 631 determines 50 MHz as the final nominal channel bandwidth.

The control unit 631 configures (derives) parameters necessary for the measurement of an ACLR (2103). The parameters include $BW_{Nominal}$ and $BW_{ConFIG}$.

The control unit 631 configures $BW_{Nominal}$ at the nominal channel bandwidth (50 MHz).

The control unit 631 refers to FIG. 11 and acquires information related to the set of possible SCSs for $BW_{Nominal}$ (50 MHz). The set of SCSs acquired here is {15, 30, 60} kHz. The control unit 631 refers to the table in FIG. 12 for each of the SCSs in the set of SCSs and acquires $N_{RB}$. The control unit 631 then calculates $BW_{Config}$ by using (Expression 1) for each of the SCSs.

In a case of SCS = 15 kHz: $BW_{Config} = 270 \times 15 \times 12 = 48{,}600$ kHz
In a case of SCS = 30 kHz: $BW_{Config} = 133 \times 30 \times 12 = 47{,}880$ kHz
In a case of SCS = 60 kHz: $BW_{Config} = 65 \times 60 \times 12 = 46{,}800$ kHz

According to "NOTE 2" in the table in FIG. 17, $BW_{Config}$ provides the largest value among the possible values. The control unit 631 configures $BW_{Config}$ at 48,600 kHz.

The measurement unit 632 refers to the first row and the second row of the table in FIG. 17. The measurement unit 632 then measures an ACLR by using $BW_{Nominal}$ and $BW_{Config}$ (2104).

In the table in FIG. 17, the first row defines a method of measuring an ACLR related to an adjacent channel (nominal channel) outside the passband and a requirement of the ACLR. The adjacent channel will be referred to as a "first adjacent channel". The second row defines a method of measuring an ACLR related to an adjacent channel (nominal channel) adjacent to the first adjacent channel and a requirement of the ACLR. The adjacent channel will be referred to as a "second adjacent channel" below.

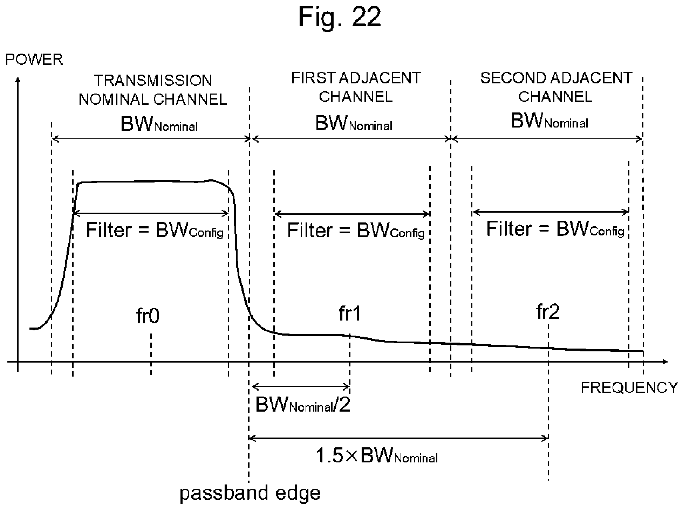

Since the repeater 200 does not recognize the bandwidth and the location of the channel of itself, an ACLR is evaluated by assuming that the channel (nominal channel) to be used for transmission from the repeater 200 is at a passband edge. FIG. 22 is a diagram illustrating a relationship of a nominal channel at a passband edge, the first adjacent channel, and the second adjacent channel. In FIG. 22, the nominal channel at the passband edge is indicated as "transmission nominal channel". To simplify description, only "the first adjacent channel and the second adjacent channel" adjacent to the passband edge on the upper side in the frequency direction. As understood from FIG. 22, an ACLR measured by the repeater 200 is a ratio between a power in a bandwidth of the nominal channel at the passband edge and a power in the bandwidth of the nominal channel adjacent to the passband on the outer side thereof (i.e., the first adjacent channel or the second adjacent channel). Each representation "Filter = $BW_{Config}$" in FIG. 22 indicates the bandwidth of a filter for measuring power in the corresponding nominal channel.

According to the first row of the table in FIG. 17, the first adjacent channel has the same bandwidth as $BW_{Nominal}$. A center frequency fr1 of the first adjacent channel is defined as a frequency positioned away from the passband edge by ($BW_{Nominal}/2$). Further, a filter used in the first adjacent channel is a bandwidth defined by $BW_{ConFIG}$.

The measurement unit 632 measures an ACLR related to the nominal channel at the passband edge and the first adjacent channel as follows. The measurement unit 632 filters the nominal channel at the passband edge with the center frequency fr0 as the center and a bandwidth of $BW_{ConFIG.}$ The measurement unit 632 then measures a power Pr0 of the nominal channel at the passband edge. The measurement unit 632 filters the first adjacent channel with the center frequency fr1 as the center and a bandwidth of $BW_{ConFIG.}$ The measurement unit 632 then measures a power Pr1 of the first adjacent channel. The measurement unit 632 obtains an ACLR related to the nominal channel at the passband edge and the first adjacent channel according to an expression, Pr0/Pr1. The measurement unit 632 evaluates the ACLR. The measurement unit 632 determines whether the ACLR is equal to or larger than the ACLR limit value (45 dB) defined in the first row of the table in FIG. 17. The measurement unit 632 may output the result of the determination (i.e., an evaluation result) to an output apparatus via the IF 610.

According to the second row of the table in FIG. 17, the second adjacent channel has the same bandwidth as $BW_{Nominal}$. A center frequency fr2 of the second adjacent channel is defined as a frequency positioned away from the passband edge by ($1.5 \times BW_{Nominal}$). Further, a filter used in the second adjacent channel is a bandwidth defined by $BW_{ConFIG.}$

The measurement unit 632 measures an ACLR related to the nominal channel at the passband edge and the second adjacent channel as follows. The measurement unit 632 measures a power Pr0 of the nominal channel at the passband edge as described above. The measurement unit 632 filters the second adjacent channel with the center frequency fr2 as the center and a bandwidth of $BW_{ConFIG.}$ The measurement unit 632 then measures a power Pr2 of the second adjacent channel. The measurement unit 632 obtains an ACLR related to the nominal channel at the passband edge and the second adjacent channel according to an expression, Pr0/Pr2. The measurement unit 632 evaluates the ACLR. The measurement unit 632 determines whether the ACLR is equal to or larger than the ACLR limit value (45 dB) defined in the second row of the table in FIG. 17. The measurement unit 632 may output the result of the determination (i.e., an evaluation result) to an output apparatus via the IF 610.

Note that, when it is assumed that the first and second adjacent channels are E-UTRA channels, the measurement apparatus 600 can measure an ACLR as described above based on the third row and the fourth row of the table in FIG. 17.

<1-9. Effects>

The configuration above exerts the following effects. In known techniques, parameters necessary for measurement of an ACLR cannot be configured due to the configuration (for example, the pass bandwidth) of a repeater in some cases. This leads to an issue that evaluation of an ACLR cannot be performed appropriately in such a repeater. In contrast to this, according to the configuration above, the measurement apparatus 600 can configure parameters ($BW_{Nominal}$ and $BW_{Config}$) necessary for measurement of an ACLR irrespective of the configuration of a repeater. The measurement apparatus 600 can appropriately evaluate an ACLR by using the parameters ($BW_{Nominal}$ and $BW_{Config}$).

<1-10. Example Alterations>

A plurality of passbands are arranged in some cases. The configuration and processing of the measurement apparatus 600 above may be applied to such a case. In a case where a plurality of passbands are arranged, a gap between two passbands is referred to as a "gap between passbands" when the two passbands belong to the same operating band, while being referred to as an "inter-passband gap" when two passbands belong to different operating bands.

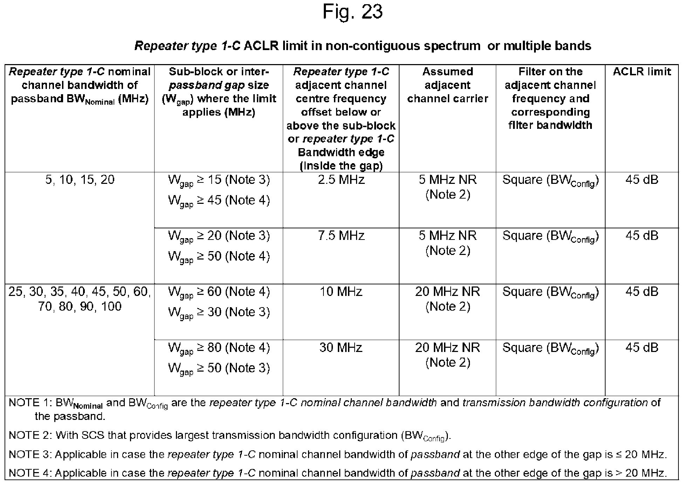

FIG. 23 is a table illustrating methods of measuring an ACLR and requirements of an ACLR when a plurality of passbands are arranged. The measurement apparatus 600 configures $BW_{Nominal}$ and $BW_{Config}$ by a method similar to that described above. The measurement apparatus 600 may refer to the table in FIG. 23 and measure an ACLR by using $BW_{Nominal}$ and $BW_{ConFIG.}$

Further, the measurement apparatus 600 may be configured to measure a CACLR. A CACLR of the gap between passbands or the inter-passband gap may be a ratio between a and b below.

a) Sum of filtered mean powers centered on two respective nominal channel center frequencies assigned to be adjacent to the respective sides of the gap between passband or the inter-passband gap
b) Filtered mean power centered on a frequency channel adjacent to one of the respective passband edges

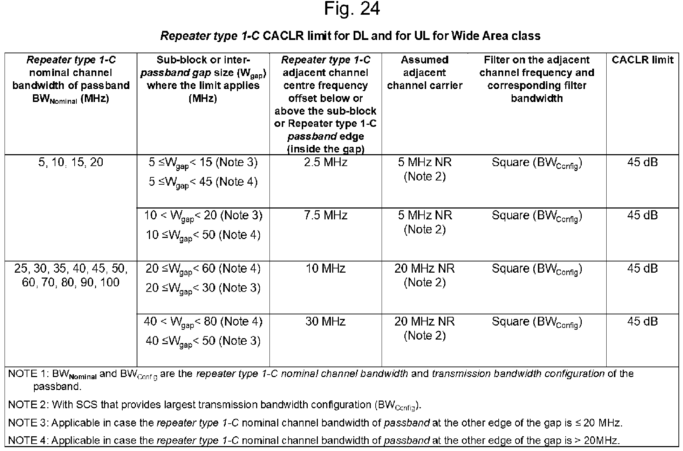

FIG. 24 is a table illustrating methods of measuring a CACLR and requirements of a CACLR when a plurality of passbands are arranged. The measurement apparatus 600 configures $BW_{Nominal}$ and $BW_{Config}$ by a method similar to that described above. The measurement apparatus 600 may refer to the table in FIG. 24 and measure a CACLR by using $BW_{Nominal}$ and $BW_{ConFIG.}$

<<2. Second Example Embodiment>>

The control unit 631 may configure $BW_{Nominal}$ and $BW_{Config}$ as follows. When the operating band belongs to FR1, the control unit 631 obtains a nominal channel bandwidth according to (Expression 2). The control unit 631 configures $BW_{Nominal}$ at the nominal channel bandwidth. The control unit 631 configures a value obtained by multiplying $BW_{Nominal}$ by a predetermined coefficient X (= $BW_{Nominal} \times X$), as $BW_{ConFIG}$.

When the operating band belongs to FR2, the control unit 631 obtains a nominal channel bandwidth according to (Expression 3). The control unit 631 configures $BW_{Nominal}$ at the nominal channel bandwidth. The control unit 631 configures a value obtained by multiplying $BW_{Nominal}$ by the predetermined coefficient X (= $BW_{Nominal} \times X$), as $BW_{ConFIG}$.

The coefficient X is configured so that $BW_{Config}$ would be within the pass bandwidth, for example. For example, the coefficient X may be a value in a range between 0.90 to 0.99. The coefficient X may be 0.95.

The control unit 631 may configure the coefficient X as follows. Assume that the control unit 631 configures the coefficient X under condition 1 above. The control unit 631 obtains a nominal channel bandwidth according to (Expression 2). The nominal channel bandwidth results in being 75 MHz. The control unit 631 configures $BW_{Nominal}$ at the nominal channel bandwidth.

The control unit 631 refers to the table in FIG. 11 and acquires the values of "BS channel bandwidth" specified as possible values for "n3". A set of "BS channel bandwidth" acquired here is {5, 10, 15, 20, 25, 30, 35, 40, 45, 50} MHz. The control unit 631 acquires, as a first bandwidth BW1, a bandwidth that is equal to or smaller than $BW_{Nominal}$ (75 MHz) and is also the largest among the plurality of channel bandwidths specified as the possible values of "BS channel bandwidth" in the table in FIG. 11. In the set of "BS channel bandwidth", a bandwidth that is equal to or smaller than $BW_{Nominal}$ (75 MHz) and is also the largest is 50 MHz. Hence, the control unit 631 configures a first bandwidth BW1 at 50 MHz.

The control unit 631 refers to the table in FIG. 11 by using the first bandwidth BW1 (= 50 MHz). The control unit 631 acquires information related to the set of possible SCSs for the first bandwidth BW1 (= 50 MHz). The set of SCSs acquired here is {15, 30, 60} kHz. The control unit 631 refers to the table in FIG. 12 for each of the SCSs in the set of SCSs and acquires $N_{RB}$. The control unit 631 then calculates a second bandwidth BW2 by using (Expression 1) for each of the SCSs. The second bandwidth BW2, similarly to $BW_{Config}$, indicates a bandwidth to which resource blocks are actually assigned for transmission from the repeater 200.

In a case of SCS = 15 kHz: BW2 = 270 $\times$ 15 $\times$ 12 = 48,600 kHz
In a case of SCS = 30 kHz: BW2 = 133 $\times$ 30 $\times$ 12 = 47,880 kHz
In a case of SCS = 60 kHz: BW2 = 65 $\times$ 60 $\times$ 12 = 46,800 kHz

The control unit 631 calculates BW2/BW1 for each of the SCSs. The control unit 631 configures the largest value of the calculated BW2/BW1, as the coefficient X. In the example above, the largest value of BW2/BW1 is 0.972. Hence, the control unit 631 configures the coefficient X at 0.972.

<<3. Third Example Embodiment>>

The configuration and processing of the measurement apparatus 600 may be applied to measurement of an ACRR. An ACRR is a ratio between a mean gain in a passband and a mean gain in a channel adjacent to the passband.

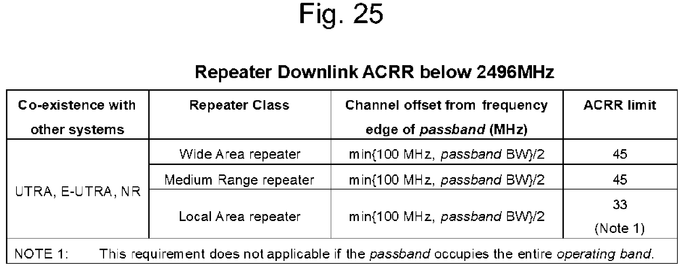

FIG. 25 is a table illustrated in NPL 2 and illustrating methods of measuring an ACRR and requirements of an ACRR. The requirements of an ACRR are described as "ACRR limit".

In FIG. 25, "min{100 MHz, passband BW}" is substantially the same as the nominal channel bandwidth above. Further, in measurement of an ACRR, similarly to an ACLR, filtering using $BW_{Config}$ may be employed. Hence, the measurement apparatus 600 may measure an ACRR by using $BW_{Nominal}$ and $BW_{ConFIG}$.

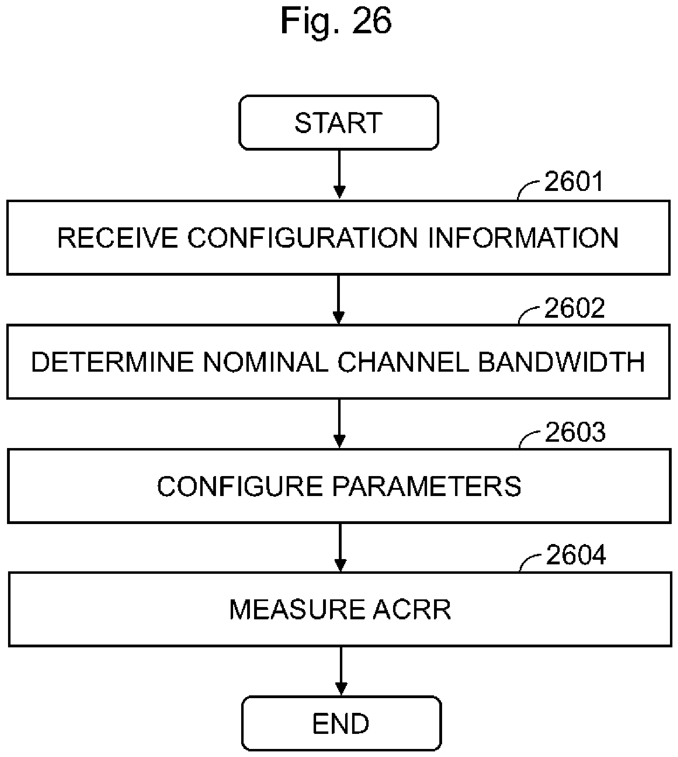

FIG. 26 is a flowchart illustrating a flow of processing of the measurement apparatus 600 according to a third example embodiment.

The control unit 631 receives configuration information necessary for measurement of an ACRR (2601). The control unit 631 receives configuration information from the repeater 200 via the IF 610. The control unit 631 may receive configuration information input by an operation by an operator, via the IF 610. The configuration information includes the type of the repeater 200, the class of the repeater 200, the operating band of the base station 100, and a pass bandwidth.

The control unit 631 determines a nominal channel bandwidth in a method described in the first example embodiment or the second example embodiment (2602). Further, the control unit 631 configures parameters ($BW_{Nominal}$ and $BW_{Config}$) in a method described in the first example embodiment or the second example embodiment (2603).

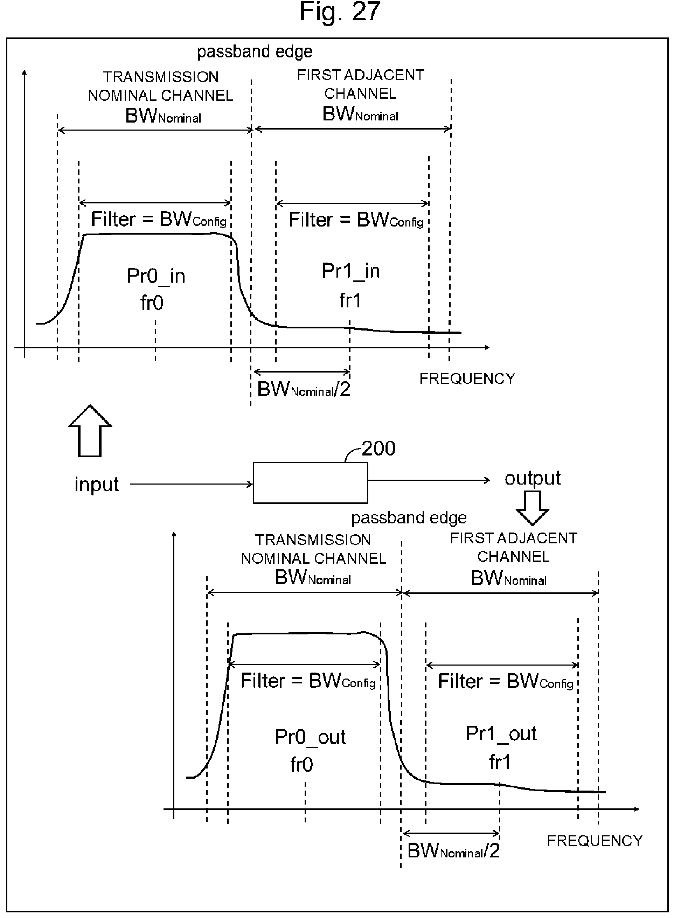

The measurement unit 632 measures an ACRR by using $BW_{Nominal}$ and $BW_{Config}$ (2604). FIG. 27 is a diagram for illustrating a method of measuring an ACRR.

The measurement unit 632 executes the following processing for an input signal for the repeater 200. The measurement unit 632 filters the nominal channel at the passband edge with the center frequency fr0 as the center and a bandwidth of $BW_{ConFIG}$. The measurement unit 632 then measures a power Pr0_in of the nominal channel at the passband edge. The measurement unit 632 filters the first adjacent channel with the center frequency fr1 as the center and a bandwidth of $BW_{ConFIG}$. The measurement unit 632 then measures a power Pr1_in of the first adjacent channel.

The measurement unit 632 executes the following processing for an output signal from the repeater 200. The measurement unit 632 filters the nominal channel at the passband edge with the center frequency fr0 as the center and a bandwidth of $BW_{ConFIG}$. The measurement unit 632 then measures a power Pr0_out of the nominal channel at the passband edge. The measurement unit 632 filters the first adjacent channel with the center frequency fr1 as the center and a bandwidth of $BW_{ConFIG}$. The measurement unit 632 then measures a power Pr1_out of the first adjacent channel.

The measurement unit 632 obtains an ACRR according to (Expression 4) below.

$$ACRR = (Pr0\_out/Pr0\_in)/(Pr1\_out/Pr1\_in) \quad \text{(Expression 4)}$$

The measurement unit 632 evaluates the ACRR. The measurement unit 632 determines whether the ACRR is equal to or higher than a predetermined condition (ACRR limit). The measurement unit 632 may output the result of the determination (i.e., an evaluation result) to an output apparatus via the IF 610.

<<4. Fourth Example Embodiment>>

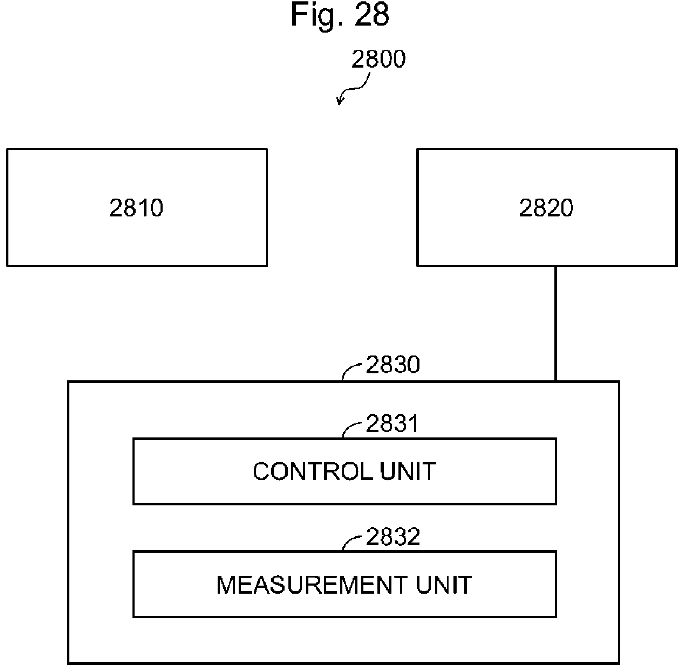

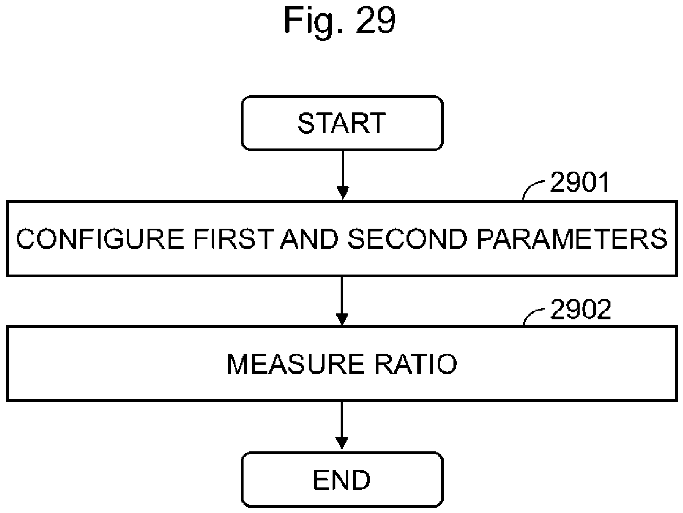

Next, a fourth example embodiment will be described with reference to Figs. 28 and 29. The fourth example embodiment is an example embodiment obtained by further generalizing the configurations of the first to third example embodiments.

<4-1. Configuration of System>

FIG. 28 is a diagram illustrating an example of a configuration of a wireless communication system 2800 according to the fourth example embodiment. The wireless communication system 2800 includes a base station 2810 and a communication apparatus 2820. The base station 2810 may have the same configuration as that of the base station 100. The communication apparatus 2820 is configured so as to perform communication in a configured passband. The communication apparatus 2820 may be a relay apparatus used to expand the coverage area of the base station 2810, and may be a repeater, for example. In this case, the communication apparatus 2820 may have the same configuration as that of the repeater 200. The communication apparatus 2820 may be a communication apparatus other than a repeater.

<4-2. Configuration of Measurement Apparatus>

The measurement apparatus 2830 is a measurement apparatus connected to the communication apparatus 2820. The measurement apparatus 2830 may be connected with wire to the communication apparatus 2820 or may be connected without wire to the communication apparatus 2820. The measurement apparatus 2830 includes a control unit 2831 and a measurement unit 2832 as functional modules. The functional modules may be implemented by at least one of one or more processors and a memory. The one or more processors may include one or more of a CPU, an MPU, and a micro controller, for example. The memory may include a volatile memory and a non-volatile memory. The memory may store program codes (instructions). The one or more processors may execute the program codes stored in the memory to implement the functions (for example, the control unit 2831 and the measurement apparatus 2832) of the measurement apparatus 2830.

Note that a program that implements the functions of the measurement apparatus 2830 may be installed in the communication apparatus 2820. In other words, the functions of the measurement apparatus 2830 may be executed on the communication apparatus 2820.

<4-3. Flow of Processing of Measurement Apparatus>

FIG. 29 is a flowchart illustrating a flow of processing of the measurement apparatus 2830 according to the fourth example embodiment. The control unit 2831 configures a first parameter indicating a bandwidth to be used for communication by the communication apparatus 2820 and a second parameter indicating a bandwidth to which a resource block is actually assigned for the communication by the communication apparatus 2820 and also indicating a bandwidth of a filter for characteristics measurement (2901). The first parameter may be $BW_{Nominal}$ above, and the second parameter may be $BW_{Config}$ above.

The measurement unit 2832 measures a ratio based on a power in a channel in a passband and a power in an adjacent channel outside the passband, by using the first parameter and the second parameter (2902). The ratio may include at least one of an ACLR, a CACLR, and an ACRR.

<4-4. Configuration of Parameters>

The control unit 2831 may configure the first parameter (for example, $BW_{Nominal}$) and the second parameter (for example, $BW_{Config}$) in the method described in the first example embodiment.

For example, the control unit 2831 may determine a nominal channel bandwidth indicating a nominal bandwidth to be used for communication by the communication apparatus 2820, by using first information related to the base station 2810. The first information indicates a relationship of the operating band of the base station 2810, the channel bandwidth of the base station 2810, and subcarrier spacing (SCS). The control unit 2831 may configure the nominal channel bandwidth as the first parameter. The control unit 2831 may configure the second parameter by using the first parameter.

The control unit 2831 may configure the first parameter (for example, $BW_{Nominal}$) and the second parameter (for example, $BW_{Config}$) in the method described in the second example embodiment.

For example, the control unit 2831 may determine a smaller bandwidth of the pass bandwidth of the communication apparatus 2820 and a predetermined bandwidth, as a nominal channel bandwidth indicating a nominal bandwidth to be used for communication by the communication apparatus 2820. The control unit 2831 may configure the nominal channel bandwidth as the first parameter. The control unit 2831 may configure a value obtained by multiplying the first parameter by a predetermined coefficient, as the second parameter.

With the above configuration, it is possible to appropriately evaluate communication characteristics or a performance index in the communication apparatus 2820.

<<5. Other Example Embodiments>>

The function of each apparatus described in the Specification may be implemented by any of software, hardware, and a combination of software and hardware. Program codes (instructions) constituting the software may be stored inside the corresponding apparatus or an external computer-readable recording medium and loaded, at the time of execution, into a memory to be executed by a processor, for example. Moreover, non-transitory computer-readable recording medium (non-transitory computer readable medium) having recorded thereon the program codes may be provided.

The whole or part of the example embodiments and the example alterations described above can be described as, but not limited to, the following supplementary notes.

(Supplementary Note 1)

A measurement apparatus for a communication apparatus configured to perform communication in a configured passband, the measurement apparatus including:

a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

a measurement means configured to measure a ratio based on a power in a channel in the passband and a power in an adjacent channel outside the passband, by using the first parameter and the second parameter, wherein

the control means is configured to

determine a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),

configure the nominal channel bandwidth as the first parameter, and

configure the second parameter by using the first parameter.

(Supplementary Note 2)

The measurement apparatus according to Supplementary Note 1, wherein the control means is configured to

determine a smaller bandwidth from a pass bandwidth in the communication apparatus and a predetermined bandwidth and

determine, when the bandwidth determined is not specified in the first information as a possible value of the channel bandwidth of the base station, a bandwidth that is equal to or smaller than the determined bandwidth and is largest among at least one channel bandwidth specified as the possible value of the channel bandwidth of the base station, as the nominal channel bandwidth.

(Supplementary Note 3)

The measurement apparatus according to Supplementary Note 2, wherein the control means is configured to

acquire at least one possible SCS for the first parameter by using the first information,
calculate at least one possible value of the second parameter for the at least one possible SCS, by using second information related to the base station and indicating a relationship of the channel bandwidth of the base station, the SCS, and a number of resource blocks to be used for transmission from the base station, and
configure a largest value of the possible value of the second parameter, as the second parameter.

(Supplementary Note 4)

The measurement apparatus according to any one of Supplementary Notes 1 to 3, wherein the ratio includes at least one of

an adjacent channel leakage power ratio (ACLR),
a cumulative adjacent channel leakage power ratio (CACLR), and
an adjacent channel rejection ratio (ACRR).

(Supplementary Note 5)

A measurement apparatus for a communication apparatus configured to perform communication in a configured passband, the measurement apparatus including:

a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and
a measurement means configured to measure a ratio based on a power in a channel in the passband and a power in an adjacent channel outside the passband, by using the first parameter and the second parameter, wherein
the control means is configured to
determine a smaller bandwidth from a pass bandwidth in the communication apparatus and a predetermined bandwidth, as a nominal channel bandwidth indicating a nominal bandwidth to be used for the communication by the communication apparatus,
configure the nominal channel bandwidth as the first parameter, and
configure a value obtained by multiplying the first parameter by a predetermined coefficient, as the second parameter.

(Supplementary Note 6)

The measurement apparatus according to Supplementary Note 5, wherein
the control means is configured to configure the coefficient by using

first information related to a base station and indicating a relationship of an operating band of the base station, a channel bandwidth of the base station, and subcarrier spacing (SCS) and
second information related to the base station and indicating a relationship of the channel bandwidth of the base station, the SCS, and a number of resource blocks to be used for transmission from the base station.

(Supplementary Note 7)

The measurement apparatus according to Supplementary Note 6, wherein the control means is configured to

determine, when the first parameter is not specified in the first information as a possible value of the channel bandwidth of the base station, a bandwidth that is equal to or smaller than the first parameter and is largest among at least one channel bandwidth specified as the possible value of the channel bandwidth of the base station, as the first bandwidth,
acquire at least one possible SCS for the first bandwidth by using the second information,
calculate a second bandwidth indicating a bandwidth to which a resource block is actually assigned for the communication by the communication apparatus, for the at least one possible SCS, and
configure a largest value of a ratio between the first bandwidth and the second bandwidth, as the coefficient.

(Supplementary Note 8)

The measurement apparatus according to any one of Supplementary Notes 5 to 7, wherein the ratio includes at least one of

an adjacent channel leakage power ratio (ACLR),
a cumulative adjacent channel leakage power ratio (CACLR), and
an adjacent channel rejection ratio (ACRR).

(Supplementary Note 9)

A measurement method for a communication apparatus configured to perform communication in a configured passband, the measurement method including:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and
measuring a ratio based on a power in a channel in the passband and a power in an adjacent channel outside the passband, by using the first parameter and the second parameter, wherein
the configuring includes
determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),
configuring the nominal channel bandwidth as the first parameter, and
configuring the second parameter by using the first parameter.

(Supplementary Note 10)

The measurement method according to Supplementary Note 9, wherein the determining the nominal channel bandwidth includes

determining a smaller bandwidth from a pass bandwidth in the communication apparatus and a predetermined bandwidth and
determining, when the bandwidth determined is not specified in the first information as a possible value of the channel bandwidth of the base station, a bandwidth that is equal to or smaller than the determined bandwidth and is largest among at least one channel bandwidth specified as the possible value of the channel bandwidth of the base station, as the nominal channel bandwidth.

(Supplementary Note 11)

The measurement method according to Supplementary Note 10, wherein the configuring the second parameter includes

acquiring at least one possible SCS for the first parameter by using the first information,
calculating at least one possible value of the second parameter for the at least one possible SCS, by using second information related to the base station and indicating a relationship of the channel bandwidth of the base station, the SCS, and a number of resource blocks to be used for transmission from the base station, and
configuring a largest value of the possible value of the second parameter, as the second parameter.

(Supplementary Note 12)

The measurement method according to any one of Supplementary Notes 9 to 11, wherein the ratio includes at least one of

an adjacent channel leakage power ratio (ACLR),
a cumulative adjacent channel leakage power ratio (CACLR), and
an adjacent channel rejection ratio (ACRR).

(Supplementary Note 13)

A measurement method for a communication apparatus configured to perform communication in a configured passband, the measurement method including:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and
measuring a ratio based on a power in a channel in the passband and a power in an adjacent channel outside the passband, by using the first parameter and the second parameter, wherein
the configuring includes
determining a smaller bandwidth from a pass bandwidth in the communication apparatus and a predetermined bandwidth, as a nominal channel bandwidth indicating a nominal bandwidth to be used for the communication by the communication apparatus,
configuring the nominal channel bandwidth as the first parameter, and
configuring a value obtained by multiplying the first parameter by a predetermined coefficient, as the second parameter.

(Supplementary Note 14)

The measurement method according to Supplementary Note 13, further including

configuring the coefficient by using
first information related to a base station and indicating a relationship of an operating band of the base station, a channel bandwidth of the base station, and subcarrier spacing (SCS) and
second information related to the base station and indicating a relationship of the channel bandwidth of the base station, the SCS, and a number of resource blocks to be used for transmission from the base station.

(Supplementary Note 15)

The measurement method according to Supplementary Note 14, wherein the configuring the coefficient includes

determining, when the first parameter is not specified in the first information as a possible value of the channel bandwidth of the base station, a bandwidth that is equal to or smaller than the first parameter and is largest among at least one channel bandwidth specified as the possible value of the channel bandwidth of the base station, as the first bandwidth,
acquiring at least one possible SCS for the first bandwidth by using the second information,
calculating a second bandwidth indicating a bandwidth to which a resource block is actually assigned for the communication by the communication apparatus, for the at least one possible SCS, and
configuring a largest value of a ratio between the first bandwidth and the second bandwidth, as the coefficient.

(Supplementary Note 16)

The measurement method according to any one of Supplementary Notes 13 to 15, wherein the ratio includes at least one of

an adjacent channel leakage power ratio (ACLR),
a cumulative adjacent channel leakage power ratio (CACLR), and
an adjacent channel rejection ratio (ACRR).

(Supplementary Note 17)

A computer-readable recording medium having recorded thereon a program causing at least one processor mounted on a communication apparatus configured to perform communication in a configured passband, to execute:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

measuring a ratio based on a power in a channel in the passband and a power in an adjacent channel outside the passband, by using the first parameter and the second parameter, wherein

the configuring includes

determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),

configuring the nominal channel bandwidth as the first parameter, and

configuring the second parameter by using the first parameter.

(Supplementary Note 18)

A computer-readable recording medium having recorded thereon a program causing at least one processor mounted on a communication apparatus configured to perform communication in a configured passband, to execute:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

measuring a ratio based on a power in a channel in the passband and a power in an adjacent channel outside the passband, by using the first parameter and the second parameter, wherein

the configuring includes

determining a smaller bandwidth from a pass bandwidth in the communication apparatus and a predetermined bandwidth, as a nominal channel bandwidth indicating a nominal bandwidth to be used for the communication by the communication apparatus,

configuring the nominal channel bandwidth as the first parameter, and

configuring a value obtained by multiplying the first parameter by a predetermined coefficient, as the second parameter.

Note that the disclosures of NPLs 1 and 2 are incorporated in the Specification by reference.

This application claims priority based on JP 2022-125726 filed on August 5, 2022, the entire disclosure of which is incorporated herein.

Reference Signs List

| 1 | Wireless Communication System |
| 100 | Base Station |
| 200 | Repeater |
| 300 | Wireless Terminal |
| 600 | Measurement Apparatus |
| 631 | Control Unit |
| 632 | Measurement Unit |
| 2830 | Measurement Apparatus |
| 2831 | Control Unit |
| 2832 | Measurement Unit |

**Claims**

1. A measurement apparatus for a communication apparatus configured to perform communication in a configured passband, the measurement apparatus comprising:

a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

a measurement means configured to measure a ratio based on a power in a channel in the passband and a power in an adjacent channel outside the passband, by using the first parameter and the second parameter, wherein the control means is configured to

determine a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),

configure the nominal channel bandwidth as the first parameter, and

configure the second parameter by using the first parameter.

2. The measurement apparatus according to claim 1, wherein the control means is configured to

determine a smaller bandwidth from a pass bandwidth in the communication apparatus and a predetermined bandwidth and

determine, when the bandwidth determined is not specified in the first information as a possible value of the channel bandwidth of the base station, a bandwidth that is equal to or smaller than the determined bandwidth and is largest among at least one channel bandwidth specified as the possible value of the channel bandwidth of the base station, as the nominal channel bandwidth.

3. The measurement apparatus according to claim 2, wherein the control means is configured to

acquire at least one possible SCS for the first parameter by using the first information,

calculate at least one possible value of the second parameter for the at least one possible SCS, by using second information related to the base station and indicating a relationship of the channel bandwidth of the base station, the SCS, and a number of resource blocks to be used for transmission from the base station, and

configure a largest value of the possible value of the second parameter, as the second parameter.

4. The measurement apparatus according to any one of claims 1 to 3, wherein the ratio includes at least one of

an adjacent channel leakage power ratio (ACLR),
a cumulative adjacent channel leakage power ratio (CACLR), and
an adjacent channel rejection ratio (ACRR).

5. A measurement apparatus for a communication apparatus configured to perform communication in a configured passband, the measurement apparatus comprising:

a control means configured to configure a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

a measurement means configured to measure a ratio based on a power in a channel in the passband and a power in an adjacent channel outside the passband, by using the first parameter and the second parameter, wherein the control means is configured to

determine a smaller bandwidth from a pass bandwidth in the communication apparatus and a predetermined bandwidth, as a nominal channel bandwidth indicating a nominal bandwidth to be used for the communication by the communication apparatus,

configure the nominal channel bandwidth as the first parameter, and

configure a value obtained by multiplying the first parameter by a predetermined coefficient, as the second parameter.

6. The measurement apparatus according to claim 5, wherein
the control means is configured to configure the coefficient by using

first information related to a base station and indicating a relationship of an operating band of the base station, a channel bandwidth of the base station, and subcarrier spacing (SCS) and

second information related to the base station and indicating a relationship of the channel bandwidth of the base station, the SCS, and a number of resource blocks to be used for transmission from the base station.

7. The measurement apparatus according to claim 6, wherein the control means is configured to

determine, when the first parameter is not specified in the first information as a possible value of the channel bandwidth of the base station, a bandwidth that is equal to or smaller than the first parameter and is largest among at least one channel bandwidth specified as the possible value of the channel bandwidth of the base station, as the first bandwidth,
acquire at least one possible SCS for the first bandwidth by using the second information,
calculate a second bandwidth indicating a bandwidth to which a resource block is actually assigned for the communication by the communication apparatus, for the at least one possible SCS, and
configure a largest value of a ratio between the first bandwidth and the second bandwidth, as the coefficient.

8. The measurement apparatus according to any one of claims 5 to 7, wherein the ratio includes at least one of

an adjacent channel leakage power ratio (ACLR),
a cumulative adjacent channel leakage power ratio (CACLR), and
an adjacent channel rejection ratio (ACRR).

9. A measurement method for a communication apparatus configured to perform communication in a configured passband, the measurement method comprising:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and
measuring a ratio based on a power in a channel in the passband and a power in an adjacent channel outside the passband, by using the first parameter and the second parameter, wherein
the configuring includes
determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),
configuring the nominal channel bandwidth as the first parameter, and
configuring the second parameter by using the first parameter.

10. The measurement method according to claim 9, wherein the determining the nominal channel bandwidth includes

determining a smaller bandwidth from a pass bandwidth in the communication apparatus and a predetermined bandwidth and
determining, when the bandwidth determined is not specified in the first information as a possible value of the channel bandwidth of the base station, a bandwidth that is equal to or smaller than the determined bandwidth and is largest among at least one channel bandwidth specified as the possible value of the channel bandwidth of the base station, as the nominal channel bandwidth.

11. The measurement method according to claim 10, wherein the configuring the second parameter includes

acquiring at least one possible SCS for the first parameter by using the first information,
calculating at least one possible value of the second parameter for the at least one possible SCS, by using second information related to the base station and indicating a relationship of the channel bandwidth of the base station, the SCS, and a number of resource blocks to be used for transmission from the base station, and
configuring a largest value of the possible value of the second parameter, as the second parameter.

12. The measurement method according to any one of claims 9 to 11, wherein the ratio includes at least one of

an adjacent channel leakage power ratio (ACLR),
a cumulative adjacent channel leakage power ratio (CACLR), and
an adjacent channel rejection ratio (ACRR).

13. A measurement method for a communication apparatus configured to perform communication in a configured passband, the measurement method comprising:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

measuring a ratio based on a power in a channel in the passband and a power in an adjacent channel outside the passband, by using the first parameter and the second parameter, wherein

the configuring includes

determining a smaller bandwidth from a pass bandwidth in the communication apparatus and a predetermined bandwidth, as a nominal channel bandwidth indicating a nominal bandwidth to be used for the communication by the communication apparatus,

configuring the nominal channel bandwidth as the first parameter, and

configuring a value obtained by multiplying the first parameter by a predetermined coefficient, as the second parameter.

14. The measurement method according to claim 13, further comprising

configuring the coefficient by using

first information related to a base station and indicating a relationship of an operating band of the base station, a channel bandwidth of the base station, and subcarrier spacing (SCS) and

second information related to the base station and indicating a relationship of the channel bandwidth of the base station, the SCS, and a number of resource blocks to be used for transmission from the base station.

15. The measurement method according to claim 14, wherein the configuring the coefficient includes

determining, when the first parameter is not specified in the first information as a possible value of the channel bandwidth of the base station, a bandwidth that is equal to or smaller than the first parameter and is largest among at least one channel bandwidth specified as the possible value of the channel bandwidth of the base station, as the first bandwidth,

acquiring at least one possible SCS for the first bandwidth by using the second information,

calculating a second bandwidth indicating a bandwidth to which a resource block is actually assigned for the communication by the communication apparatus, for the at least one possible SCS, and

configuring a largest value of a ratio between the first bandwidth and the second bandwidth, as the coefficient.

16. The measurement method according to any one of claims 13 to 15, wherein the ratio includes at least one of

an adjacent channel leakage power ratio (ACLR),

a cumulative adjacent channel leakage power ratio (CACLR), and

an adjacent channel rejection ratio (ACRR).

17. A computer-readable recording medium having recorded thereon a program causing at least one processor mounted on a communication apparatus configured to perform communication in a configured passband, to execute:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and

measuring a ratio based on a power in a channel in the passband and a power in an adjacent channel outside the passband, by using the first parameter and the second parameter, wherein

the configuring includes

determining a nominal channel bandwidth indicating a nominal bandwidth to be used for the communication by the communication apparatus, by using first information related to a base station and indicating a relationship of an operating band of the base station, a channel bandwidth of the base station, and subcarrier spacing (SCS),

configuring the nominal channel bandwidth as the first parameter, and

configuring the second parameter by using the first parameter.

18. A computer-readable recording medium having recorded thereon a program causing at least one processor mounted on a communication apparatus configured to perform communication in a configured passband, to execute:

configuring a first parameter indicating a bandwidth to be used for the communication by the communication apparatus and a second parameter indicating a bandwidth to which a resource block is actually assigned for the communication by the communication apparatus and indicating a bandwidth of a filter for characteristics measurement; and
measuring a ratio based on a power in a channel in the passband and a power in an adjacent channel outside the passband, by using the first parameter and the second parameter, wherein
the configuring includes
determining a smaller bandwidth from a pass bandwidth in the communication apparatus and a predetermined bandwidth, as a nominal channel bandwidth indicating a nominal bandwidth to be used for the communication by the communication apparatus,
configuring the nominal channel bandwidth as the first parameter, and
configuring a value obtained by multiplying the first parameter by a predetermined coefficient, as the second parameter.

# Fig. 1

# Fig. 2

# Fig. 3

```
                                                              ⌐200
 ┌──────────────────────────────────────────────────────────────────────┐
 │    ▽                                                                   │
 │    │      ⌐210                              ⌐230                       │
 │  ┌─┴────────────────────────┐      ┌─────────────────────────────┐    │
 │  │  WIRELESS COMMUNICATION  │      │      PROCESSING UNIT         │    │
 │  │          UNIT            │      │                             │    │
 │  └──────────────────────────┘      └─────────────────────────────┘    │
 │            ⌐220                                                        │
 │  ┌──────────────────────────┐                                         │
 │  │      STORAGE UNIT        │                                         │
 │  └──────────────────────────┘                                         │
 │                                                                        │
 └──────────────────────────────────────────────────────────────────────┘
```

# Fig. 4

WIRELESS COMMUNICATION UNIT 310

STORAGE UNIT 320

PROCESSING UNIT 330

300

# Fig. 5

500

510

IF

520

STORAGE UNIT

530

PROCESSING UNIT

531

CONTROL UNIT

532

MEASUREMENT UNIT

100

# Fig. 6

600

610

IF

620

STORAGE UNIT

630

PROCESSING UNIT

631

CONTROL UNIT

632

MEASUREMENT UNIT

200

# Fig. 7

| BS channel bandwidth of *lowest/highest carrier* transmitted BW$_{Channel}$ (MHz) | BS adjacent channel centre frequency offset below the lowest or above the highest carrier centre frequency transmitted | Assumed adjacent channel carrier (informative) | Filter on the adjacent channel frequency and corresponding filter bandwidth | ACLR limit |
|---|---|---|---|---|
| 5, 10, 15, 20, 25, 30, 35, 40, 45, 50, 60, 70, 80, 90,100 | BW$_{Channel}$ | NR of same BW (Note 2) | Square (BW$_{Config}$) | 45 dB |
| | 2 x BW$_{Channel}$ | NR of same BW (Note 2) | Square (BW$_{Config}$) | 45 dB |
| | BW$_{Channel}$ /2 + 2.5 MHz | 5 MHz E-UTRA | Square (4.5 MHz) | 45 dB (Note 3) |
| | BW$_{Channel}$ /2 + 7.5 MHz | 5 MHz E-UTRA | Square (4.5 MHz) | 45 dB (Note 3) |

NOTE 1: BW$_{Channel}$ and BW$_{Config}$ are the *BS channel bandwidth* and *transmission bandwidth configuration* of the *lowest/highest carrier* transmitted on the assigned channel frequency.

NOTE 2: With SCS that provides largest transmission bandwidth configuration (BW$_{Config}$).

NOTE 3: The requirements are applicable when the band is also defined for E-UTRA or UTRA.

# Fig. 8

# Fig. 9

POWER

# Fig. 10

```
        ┌──────────────┐
        │    START     │
        └──────────────┘
               │
               ▼
┌─────────────────────────────────────────┐  ⌒1001
│   RECEIVE CONFIGURATION INFORMATION      │
└─────────────────────────────────────────┘
               │
               ▼
┌─────────────────────────────────────────┐  ⌒1002
│          CONFIGURE PARAMETERS            │
└─────────────────────────────────────────┘
               │
               ▼
┌─────────────────────────────────────────┐  ⌒1003
│             MEASURE ACLR                 │
└─────────────────────────────────────────┘
               │
               ▼
        ┌──────────────┐
        │     END      │
        └──────────────┘
```

## Fig. 11

**BS channel bandwidths and SCS per operating band in FR1**

| NR Band | SCS (kHz) | BS channel bandwidth (MHz) | | | | | | | | | | | | | | |
|---|---|---|---|---|---|---|---|---|---|---|---|---|---|---|---|---|
| | | 5 | 10 | 15 | 20 | 25 | 30 | 35 | 40 | 45 | 50 | 60 | 70 | 80 | 90 | 100 |
| n1 | 15 | 5 | 10 | 15 | 20 | 25 | 30 | | 40 | 45 | 50 | | | | | |
| | 30 | | 10 | 15 | 20 | 25 | 30 | | 40 | 45 | 50 | | | | | |
| | 60 | | 10 | 15 | 20 | 25 | 30 | | 40 | 45 | 50 | | | | | |
| n2 | 15 | 5 | 10 | 15 | 20 | 25 | 30 | 35 | 40 | | | | | | | |
| | 30 | | 10 | 15 | 20 | 25 | 30 | 35 | 40 | | | | | | | |
| | 60 | | 10 | 15 | 20 | 25 | 30 | 35 | 40 | | | | | | | |
| n3 | 15 | 5 | 10 | 15 | 20 | 25 | 30 | 35 | 40 | 45 | 50 | | | | | |
| | 30 | | 10 | 15 | 20 | 25 | 30 | 35 | 40 | 45 | 50 | | | | | |
| | 60 | | 10 | 15 | 20 | 25 | 30 | 35 | 40 | 45 | 50 | | | | | |

Fig. 12

*Transmission bandwidth configuration $N_{RB}$ for FR1*

| SCS (kHz) | 5 MHz | 10 MHz | 15 MHz | 20 MHz | 25 MHz | 30 MHz | 35 MHz | 40 MHz | 45 MHz | 50 MHz | 60 MHz | 70 MHz | 80 MHz | 90 MHz | 100 MHz |
|---|---|---|---|---|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 160 | 188 | 216 | 242 | 270 | N/A | N/A | N/A | N/A | N/A |
| 30 | 11 | 24 | 38 | 51 | 65 | 78 | 92 | 106 | 119 | 133 | 162 | 189 | 217 | 245 | 273 |
| 60 | N/A | 11 | 18 | 24 | 31 | 38 | 44 | 51 | 58 | 65 | 79 | 93 | 107 | 121 | 135 |

# Fig. 13

## BS channel bandwidths and SCS per operating band in FR2

| NR Band | SCS (kHz) | BS channel bandwidth (MHz) | | | |
|---|---|---|---|---|---|
| | | 50 | 100 | 200 | 400 |
| n257 | 60 | 50 | 100 | 200 | |
| | 120 | 50 | 100 | 200 | 400 |
| n258 | 60 | 50 | 100 | 200 | |
| | 120 | 50 | 100 | 200 | 400 |
| n259 | 60 | 50 | 100 | 200 | |
| | 120 | 50 | 100 | 200 | 400 |

# Fig. 14

*Transmission bandwidth configuration* $N_{RB}$ *for FR2*

| SCS (kHz) | 50 MHz | 100 MHz | 200 MHz | 400 MHz |
| --- | --- | --- | --- | --- |
| | $N_{RB}$ | $N_{RB}$ | $N_{RB}$ | $N_{RB}$ |
| 60 | 66 | 132 | 264 | N/A |
| 120 | 32 | 66 | 132 | 264 |

# Fig. 15

## *Repeater type 1-C* ACLR limit for DL and for UL for Wide Area class

| *Repeater type 1-C* nominal channel bandwidth of lowest/highest carrier transmitted $BW_{Channel}$ (MHz) | *Repeater type 1-C* adjacent channel centre frequency offset below the lowest or above the highest carrier centre frequency transmitted | Assumed adjacent channel carrier (informative) | Filter on the adjacent channel frequency and corresponding filter bandwidth | ACLR limit |
|---|---|---|---|---|
| min(100 MHz, $BW_{passband}$) | $BW_{Channel}$ | NR of same BW (Note 2) | Square ($BW_{Config}$) | 45 dB |
| | 2 x $BW_{Channel}$ | NR of same BW (Note 2) | Square ($BW_{Config}$) | 45 dB |
| | $BW_{Channel}/2 + 2.5$ MHz | 5 MHz E-UTRA | Square (4.5 MHz) | 45 dB (Note 3) |
| | $BW_{Channel}/2 + 7.5$ MHz | 5 MHz E-UTRA | Square (4.5 MHz) | 45 dB (Note 3) |
| NOTE 1:$BW_{Channel}$ and $BW_{Config}$ are the *repeater type 1-C nominal repeater bandwidth configuration* of the *lowest/highest carrier* transmitted on the assigned channel frequency. | | | | |
| NOTE 2:With SCS that provides largest transmission bandwidth configuration ($BW_{Config}$). | | | | |
| NOTE 3:The requirements are applicable when the band is also defined for E-UTRA or UTRA. | | | | |

# Fig. 16

## *Repeater type 2-O* ACLR limit for DL and UL for WA class and DL for LA class

| *Repeater nominal channel bandwidth of lowest/highest carrier transmitted* BW<sub>Channel</sub> (MHz) | *Repeater adjacent channel centre frequency offset below the lowest or above the highest carrier centre frequency transmitted* | Assumed adjacent channel carrier | Filter on the adjacent channel frequency and corresponding filter bandwidth | ACLR limit (dB) |
|---|---|---|---|---|
| min(400MHz, BW$_{passband}$) | BW$_{Channel}$ | NR of same BW (Note 2) | Square (BW$_{Config}$) | 28 (Note 3) 26 (Note 4) |
| NOTE 1: BW$_{Channel}$ and BW$_{Config}$ are the nominal *repeater bandwidth configuration* of the *lowest/highest carrier* transmitted on the assigned channel frequency. | | | | |
| NOTE 2: With SCS that provides nominal *bandwidth configuration* (BW$_{Config}$). | | | | |
| NOTE 3: Applicable to bands defined within the frequency spectrum range of 24.25 – 33.4 GHz | | | | |
| NOTE 4: Applicable to bands defined within the frequency spectrum range of 37 – 52.6 GHz | | | | |

# Fig. 17

## *Repeater type 1-C* ACLR limit for DL and for UL for Wide Area class

| *Repeater type 1-C* nominal channel bandwidth of passband BW$_{Nominal}$ (MHz) | *Repeater type 1-C* adjacent channel centre frequency offset below or above the passband edge | Assumed adjacent channel carrier (informative) | Filter on the adjacent channel frequency and corresponding filter bandwidth | ACLR limit |
|---|---|---|---|---|
| 5, 10, 15, 20, 25, 30, 35, 40, 45, 50, 60, 70, 80, 90, 100 | BW$_{Nominal}$/2 | NR of same BW (Note 2) | Square (BW$_{Config}$) | 45 dB |
| | 1.5 x BW$_{Nominal}$ | NR of same BW (Note 2) | Square (BW$_{Config}$) | 45 dB |
| | 2.5 MHz | 5 MHz E-UTRA | Square (4.5 MHz) | 45 dB (Note 3) |
| | 7.5 MHz | 5 MHz E-UTRA | Square (4.5 MHz) | 45 dB (Note 3) |
| NOTE 1: BW$_{Nominal}$ and BW$_{Config}$ are the *repeater type 1-C nominal channel bandwidth* and *transmission bandwidth configuration* of the passband. | | | | |
| NOTE 2: With SCS that provides largest transmission bandwidth configuration (BW$_{Config}$). | | | | |
| NOTE 3: The requirements are applicable when the band is also defined for E-UTRA or UTRA. | | | | |

# Fig. 18

## Repeater type 1-C ACLR limit for UL for Local Area

| Repeater type 1-C nominal channel bandwidth of passbandBW$_{Nominal}$ (MHz) | Repeater type 1-C adjacent channel centre frequency offset below or above the passband edge | Assumed adjacent channel carrier (informative) | Filter on the adjacent channel frequency and corresponding filter bandwidth | ACLR limit |
|---|---|---|---|---|
| 5, 10, 15, 20, 25, 30, 35, 40, 45, 50, 60, 70, 80, 90, 100 | BW$_{Nominal}$/2 | NR of same BW (Note 2) | Square (BW$_{Config}$) | 31 dB |
| | 1.5 x BW$_{Nominal}$ | NR of same BW (Note 2) | Square (BW$_{Config}$) | 31 dB |
| | 2.5 MHz | 5 MHz E-UTRA | Square (4.5 MHz) | 31 dB |
| | 7.5 MHz | 5 MHz E-UTRA | Square (4.5 MHz) | 31 dB |
| NOTE 1: BW$_{Nominal}$ and BW$_{Config}$ are the *repeater type 1-C nominal channel bandwidth* and *transmission bandwidth configuration* of the passband. | | | | |
| NOTE 2: With SCS that provides largest transmission bandwidth configuration (BW$_{Config}$). | | | | |
| NOTE 3: The requirements are applicable when the band is also defined for E-UTRA or UTRA. | | | | |

# Fig. 19

**Repeater type 2-O ACLR limit for DL and UL for WA class and DL for LA class**

| Repeater nominal channel bandwidth of passband BW$_{Nominal}$ (MHz) | Repeater adjacent channel centre frequency offset below or above the passband edge | Assumed adjacent channel carrier | Filter on the adjacent channel frequency and corresponding filter bandwidth | ACLR limit (dB) |
|---|---|---|---|---|
| 50, 100, 200, 400 | BW$_{Nominal}$/2 | NR of same BW (Note 2) | Square (BW$_{Config}$) | 28 (Note 3) 26 (Note 4) |
| NOTE 1: BW$_{Nominal}$ and BW$_{Config}$ are the *repeater type 2-O nominal channel bandwidth* and *transmission bandwidth configuration* of the passband. ||||| 
| NOTE 2: With SCS that provides largest *transmission bandwidth configuration* (BW$_{Config}$). ||||| 
| NOTE 3: Applicable to bands defined within the frequency spectrum range of 24.25 – 33.4 GHz ||||| 
| NOTE 4: Applicable to bands defined within the frequency spectrum range of 37 – 52.6 GHz |||||

# Fig. 20

### Repeater type 2-O ACLR limit for UL LA class

| Repeater nominal channel bandwidth of passband BW$_{Nominal}$ (MHz) | Repeater adjacent channel centre frequency offset below or above the passband edge | Assumed adjacent channel carrier | Filter on the adjacent channel frequency and corresponding filter bandwidth | ACLR limit (dB) |
|---|---|---|---|---|
| 50, 100, 200, 400 | BW$_{Nominal}$/2 | NR of same BW (Note 2) | Square (BW$_{Config}$) | 17 (Note 3) 16 (Note 4) |
| NOTE 1: BW$_{Nominal}$ and BW$_{Config}$ are the *repeater type 2-O nominal channel bandwidth* and *transmission bandwidth configuration* of the passband. | | | | |
| NOTE 2: With SCS that provides largest *transmission bandwidth configuration* (BW$_{Config}$). | | | | |
| NOTE 3: Applicable to bands defined within the frequency spectrum range of 24.25 – 33.4 GHz | | | | |
| NOTE 4: Applicable to bands defined within the frequency spectrum range of 37 – 52.6 GHz | | | | |

# Fig. 21

```
        ┌──────────────┐
        │    START     │
        └──────┬───────┘
               │
               ▼                          ⌐2101
┌──────────────────────────────────────────────┐
│       RECEIVE CONFIGURATION INFORMATION        │
└────────────────────┬───────────────────────────┘
                     │
                     ▼                    ⌐2102
┌──────────────────────────────────────────────┐
│       DETERMINE NOMINAL CHANNEL BANDWIDTH      │
└────────────────────┬───────────────────────────┘
                     │
                     ▼                    ⌐2103
┌──────────────────────────────────────────────┐
│             CONFIGURE PARAMETERS               │
└────────────────────┬───────────────────────────┘
                     │
                     ▼                    ⌐2104
┌──────────────────────────────────────────────┐
│               MEASURE ACLR                     │
└────────────────────┬───────────────────────────┘
                     │
                     ▼
             ┌──────────────┐
             │     END      │
             └──────────────┘
```

## Fig. 22

## Fig. 23

**Repeater type 1-C ACLR limit in non-contiguous spectrum or multiple bands**

| Repeater type 1-C nominal channel bandwidth of passband BW$_{Nominal}$ (MHz) | Sub-block or inter-passband gap size (W$_{gap}$) where the limit applies (MHz) | Repeater type 1-C adjacent channel centre frequency offset below or above the sub-block or repeater type 1-C Bandwidth edge (inside the gap) | Assumed adjacent channel carrier | Filter on the adjacent channel frequency and corresponding filter bandwidth | ACLR limit |
|---|---|---|---|---|---|
| 5, 10, 15, 20 | W$_{gap}$ ≥ 15 (Note 3) <br> W$_{gap}$ ≥ 45 (Note 4) | 2.5 MHz | 5 MHz NR (Note 2) | Square (BW$_{Config}$) | 45 dB |
| | W$_{gap}$ ≥ 20 (Note 3) <br> W$_{gap}$ ≥ 50 (Note 4) | 7.5 MHz | 5 MHz NR (Note 2) | Square (BW$_{Config}$) | 45 dB |
| 25, 30, 35, 40, 45, 50, 60, 70, 80, 90, 100 | W$_{gap}$ ≥ 60 (Note 4) <br> W$_{gap}$ ≥ 30 (Note 3) | 10 MHz | 20 MHz NR (Note 2) | Square (BW$_{Config}$) | 45 dB |
| | W$_{gap}$ ≥ 80 (Note 4) <br> W$_{gap}$ ≥ 50 (Note 3) | 30 MHz | 20 MHz NR (Note 2) | Square (BW$_{Config}$) | 45 dB |

NOTE 1: BW$_{Nominal}$ and BW$_{Config}$ are the repeater type 1-C nominal channel bandwidth and transmission bandwidth configuration of the passband.

NOTE 2: With SCS that provides largest transmission bandwidth configuration (BW$_{Config}$).

NOTE 3: Applicable in case the repeater type 1-C nominal channel bandwidth of passband at the other edge of the gap is ≤ 20 MHz.

NOTE 4: Applicable in case the repeater type 1-C nominal channel bandwidth of passband at the other edge of the gap is > 20 MHz.

## Fig. 24

**Repeater type 1-C CACLR limit for DL and for UL for Wide Area class**

| Repeater type 1-C nominal channel bandwidth of passband BW_Nominal (MHz) | Sub-block or inter-passband gap size (W_gap) where the limit applies (MHz) | Repeater type 1-C adjacent channel centre frequency offset below or above the sub-block or Repeater type 1-C passband edge (Inside the gap) | Assumed adjacent channel carrier | Filter on the adjacent channel frequency and corresponding filter bandwidth | CACLR limit |
|---|---|---|---|---|---|
| 5, 10, 15, 20 | $5 \leq W_{gap} < 15$ (Note 3)<br>$5 \leq W_{gap} < 45$ (Note 4) | 2.5 MHz | 5 MHz NR (Note 2) | Square ($BW_{Config}$) | 45 dB |
| | $10 < W_{gap} < 20$ (Note 3)<br>$10 \leq W_{gap} < 50$ (Note 4) | 7.5 MHz | 5 MHz NR (Note 2) | Square ($BW_{Config}$) | 45 dB |
| 25, 30, 35, 40, 45, 50, 60, 70, 80, 90, 100 | $20 \leq W_{gap} < 60$ (Note 4)<br>$20 \leq W_{gap} < 30$ (Note 3) | 10 MHz | 20 MHz NR (Note 2) | Square ($BW_{Config}$) | 45 dB |
| | $40 < W_{gap} < 80$ (Note 4)<br>$40 \leq W_{gap} < 50$ (Note 3) | 30 MHz | 20 MHz NR (Note 2) | Square ($BW_{Config}$) | 45 dB |
| NOTE 1: $BW_{Nominal}$ and $BW_{Config}$ are the *repeater type 1-C nominal channel bandwidth* and *transmission bandwidth configuration* of the passband. | | | | | |
| NOTE 2: With SCS that provides largest transmission bandwidth configuration ($BW_{Config}$). | | | | | |
| NOTE 3: Applicable in case the *repeater type 1-C* nominal channel bandwidth of *passband* at the other edge of the gap is ≤ 20 MHz. | | | | | |
| NOTE 4: Applicable in case the *repeater type 1-C* nominal channel bandwidth of *passband* at the other edge of the gap is > 20MHz. | | | | | |

# Fig. 25

## Repeater Downlink ACRR below 2496MHz

| Co-existence with other systems | Repeater Class | Channel offset from frequency edge of *passband* (MHz) | ACRR limit |
|---|---|---|---|
| UTRA, E-UTRA, NR | Wide Area repeater | min{100 MHz, *passband* BW}/2 | 45 |
| | Medium Range repeater | min{100 MHz, *passband* BW}/2 | 45 |
| | Local Area repeater | min{100 MHz, *passband* BW}/2 | 33 (Note 1) |
| NOTE 1: This requirement does not applicable if the *passband* occupies the entire *operating band*. | | | |

# Fig. 26

```
                    ┌──────────────────┐
                    │      START       │
                    └──────────────────┘
                             │
                             ▼
┌────────────────────────────────────────────────────┐  ╭ 2601
│       RECEIVE CONFIGURATION INFORMATION             │
└────────────────────────────────────────────────────┘
                             │
                             ▼
┌────────────────────────────────────────────────────┐  ╭ 2602
│       DETERMINE NOMINAL CHANNEL BANDWIDTH           │
└────────────────────────────────────────────────────┘
                             │
                             ▼
┌────────────────────────────────────────────────────┐  ╭ 2603
│             CONFIGURE PARAMETERS                    │
└────────────────────────────────────────────────────┘
                             │
                             ▼
┌────────────────────────────────────────────────────┐  ╭ 2604
│               MEASURE ACRR                          │
└────────────────────────────────────────────────────┘
                             │
                             ▼
                    ┌──────────────────┐
                    │       END        │
                    └──────────────────┘
```

## Fig. 27

# Fig. 28

2800

| 2810 |

| 2820 |

2830

## CONTROL UNIT
2831

## MEASUREMENT UNIT
2832

# Fig. 29

```
                    ┌─────────────────────┐
                    │        START        │
                    └─────────────────────┘
                               │
                               ▼                          ⌐2901
┌───────────────────────────────────────────────────────────────┐
│          CONFIGURE FIRST AND SECOND PARAMETERS                  │
└───────────────────────────────────────────────────────────────┘
                               │
                               ▼                          ⌐2902
┌───────────────────────────────────────────────────────────────┐
│                      MEASURE RATIO                              │
└───────────────────────────────────────────────────────────────┘
                               │
                               ▼
                    ┌─────────────────────┐
                    │         END         │
                    └─────────────────────┘
```

# EP 4 568 329 A1

## INTERNATIONAL SEARCH REPORT

International application No.

**PCT/JP2023/018047**

| A. | CLASSIFICATION OF SUBJECT MATTER |
|---|---|

*H04W 24/08*(2009.01)i; *H04W 16/26*(2009.01)i
FI:  H04W24/08; H04W16/26

According to International Patent Classification (IPC) or to both national classification and IPC

| B. | FIELDS SEARCHED |
|---|---|

Minimum documentation searched (classification system followed by classification symbols)

H04W24/08; H04W16/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | 3rd Generation Partnership Project; Technical Specification Group Radio Access Network; NR; NR Repeater Radio Transmission and Reception (Release 17). 3GPP TS38.106, V17.1.0. 3GPP. 24 June 2022, pp. 23-27, 66-68<br>sections 6.5.2, 7.5.2 | 1-18 |
| A | 3rd Generation Partnership Project; Technical Specification Group Radio Access Network; NR; Base Station (BS) radio transmission and reception (Release 17). 3GPP TS38.104, V17.6.0. 3GPP. 30 June 2022, pp. 20-21, 38, 40-45<br>sections 3.2, 5.3.2, 5.3.5 | 1-18 |

☐ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2023** | **18 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

54

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022125726 A

**Non-patent literature cited in the description**

- *3GPP TS 38.104 v17.6.0*, June 2022
- *3GPP TS 38.106 v17.1.0*, June 2022